# EUROPÄISCHE PATENTSCHRIFT

(11) **EP 2 593 333 B1**
(45) Veröffentlichungstag und Bekanntmachung des Hinweises auf die Patenterteilung: **01.10.2014**
(21) Anmeldenummer: 11703654.1
(22) Anmeldetag: 04.02.2011
(51) Int. Cl.: B60P 3/32, B64F 1/32

(54) **FAHRZEUG IN MODULARER BAUWEISE**
MODULAR VEHICLE
VÉHICULE MODULAIRE

(30) Priorität: 07.12.2010 DE 202010016249 U; 13.07.2010 DE 102010027420
(43) Veröffentlichungstag der Anmeldung: 22.05.2013
(73) Patentinhaber: Drehtainer GmbH Spezial Container- Und Fahrzeugbau, 19246 Valluhn (DE)
(72) Erfinder: MEYER, Helmut, 25469 Halstenbek (DE)
(74) Vertreter: Stork Bamberger
(86) Internationale Anmeldenummer: PCT/EP2011/051674
(87) Internationale Veröffentlichungsnummer: WO 2012/007184

(56) Entgegenhaltungen:
- EP-A1- 0 489 673
- DE-A1- 2 755 223
- DE-A1- 19 927 917
- DE-U1- 20 016 874
- DE-U1-202007 006 320
- FR-A1- 2 170 843
- US-A- 3 909 057

## Beschreibung

Die vorliegende Erfindung betrifft ein Fahrzeug in modularer Bauweise, nämlich mit einem Chassis und einem vollständig vom Chassis lösbaren Auflieger, wobei der Auflieger zumindest eine Funktionseinheit umfasst.

Solche Fahrzeuge (wie z.B. in DE 2755223 oder EPC 489673 offenbart) kommen in unterschiedlichen Bereichen, z.B. im Bereich der Versorgungs- oder Transportindustrie, insbesondere jedoch beim Militär, zum Einsatz. Einzelne Fahrzeuge bzw. aus zwei oder mehreren solcher Fahrzeuge gebildete Funktions-Anordnungen können z.B. als mobiles Lazarett, als Kantine, als Lager, als Konferenzraum oder auch als Gefechtsstand zusammengestellt und eingesetzt werden. Dabei wird mindestens ein Fahrzeug, vorzugsweise jedoch mehrere Fahrzeuge, in einem rechten Winkel zueinander, vorzugsweise heckseitig, an ein zentrales Fahrzeug gekoppelt. Durch Türen, Schleusen oder dergleichen, die heckseitig und/oder an den Seiten der Fahrzeuge angeordnet sind, kann zwischen den einzelnen Fahrzeugen eine Verbindung hergestellt werden, so dass durch mehrere Fahrzeuge in kurzer Zeit eine nahezu beliebig vergrößerbare Funktions-Anordnung erstellt werden kann. Problematisch ist jedoch, dass der Einsatz solcher Funktions-Anordnungen in der Regel im Gelände erfolgt, also auf einem unebenen Untergrund.

Das Chassis oder auch Fahrgestell solcher durch die Merkmale des Oberbegriffes des Anspruches 1 beschriebenen Spezial-Großraumfahrzeuge umfasst in bekannter Weise die Radaufhängungen sowie die üblichen Antriebselemente, wie Getriebe, Motor und dergleichen. Der Auflieger ist in der beschriebenen Weise aus der Fahrerkabine und einer zusätzlichen Funktionseinheit, also z.B. dem Operationssaal, dem Lazarett, dem Konferenzbereich oder dergleichen gebildet. Die Fahrerkabine und die Funktionseinheit bilden eine Einheit, die am Chassis befestigbar ist. In einer vorteilhaften Ausgestaltung ist die Funktionseinheit, die Fahrerkabine oder der Auflieger vollständig vom Chassis lösbar. Mit vollständig lösbar ist insbesondere gemeint, dass die Funktionseinheit, die Fahrerkabine oder der Auflieger ausgewechselt werden können, ein Chassis also mit wechselnden Funktionseinheiten, Fahrerkabinen oder Auflieger bestückbar ist. Das bedeutet jedoch auch, dass sich zumindest ein Teil der Lenkung des Fahrzeugs innerhalb der vom Chassis modular getrennten Fahrerkabine befindet, weshalb die Lenkung vorzugsweise elektrisch ausgebildet ist.

Für das Verbinden von Fahrzeugen miteinander bieten sich unterschiedliche Kopplungsmöglichkeiten an, beispielsweise in Längsrichtung hintereinander, mit dem Heck aufeinander zu gerichtet. Üblicherweise werden jedoch mehrere Fahrzeuge heckseitig einzeln oder nebeneinander an die Seiten eines Zentral- oder Hauptfahrzeugs gekoppelt. Diese Kopplung erfolgt üblicherweise in einem Winkel von etwa 90°. Da sich die Fahrzeuge oft in unebenem Gelände befinden, ist es notwendig, die Fahrzeuge zueinander, insbesondere in der Höhe, auszugleichen, damit die Kopplungsbereiche der jeweiligen Fahrzeuge in Überdeckung zueinander liegen. Eine genaue Positionierung der einzelnen Fahrzeuge zueinander ist daher unerlässlich, um die volle Funktionalität z.B. auch der Türen etc. zu erreichen.

Es ist bekannt, Fahrzeuge insgesamt, also die Einheit aus Chassis und Auflieger als Ganzes, bezüglich ihrer vertikalen Ausrichtung zu regulieren. Dies erfolgt üblicherweise über eine dem Chassis zugeordnete Luftfederung, die jedoch zum einen ungenau ist und zum anderen nur einen geringen Verstellweg ermöglicht. Des Weiteren haben diese bekannten Fahrzeuge den Nachteil, dass die Luftfederung und die Reifen nur eine geringe Steifigkeit aufweisen. Bei unterschiedlicher Gewichtsverteilung oder einer Gewichtsverlagerung im Auflieger kann es deshalb zu einer unterschiedlichen Einfederung an den jeweiligen Achsen oder Reifen kommen, so dass sich auch der Auflieger bewegt oder seine vorherige Position verändert. Damit einhergehend ist eine relative Verschiebung der Funktionsaufbauten in einer Funktions-Anordnung, die jedoch zu vermeiden ist. Im Ergebnis ermöglichen die aus dem Stand der Technik bekannten Lösungen - wenn überhaupt - ausschließlich eine Anpassung der Position/Lage des Chassis einschließlich des Aufliegers zum Untergrund, was jedoch die Anpassungs- und Verstellmöglichkeiten einschränkt.

Der Erfindung liegt daher die Aufgabe zugrunde, ein Fahrzeug zu schaffen, dass insbesondere auch bei größeren Unebenheiten des Untergrunds exakt und sicher in beliebiger Ausrichtung an andere Fahrzeuge koppelbar ist.

Die Aufgabe wird durch Fahrzeug mit den eingangs genannten Merkmalen dadurch gelöst, dass dem Fahrzeug eine Einrichtung zugeordnet ist, die zum Verändern der Position des Aufliegers relativ zu dem Chassis ausgebildet und eingerichtet ist. Mit dieser erfindungsgemäßen Ausbildung ist es auf besonders einfache und sichere Weise möglich, die Lage des Aufliegers unabhängig vom Chassis individuell zu verändern, um einerseits Unebenheiten im Untergrund auszugleichen und anderseits die Lage der Auflieger relativ zum Chassis zur optimalen Kopplung zweier oder mehrere Fahrzeuge bzw. der Auflieger zu verändern. So können Bodenunebenheiten ausglichen und der Auflieger horizontal ausgerichtet werden. Ferner ist die Position des Aufliegers in der Horizontalen beliebig veränderbar. Zum Koppeln zweier oder mehrerer Fahrzeuge können die Auflieger horizontal bewegt werden, um diese möglichst nahe aneinander zubringen.

Weiterhin umfasst die Einrichtung eine Verstelleinheit zum horizontalen Verstellen der Lage des Aufliegers zu dem Chassis mit Führungen und Antriebsmitteln. Damit ist es möglich, die Auflieger möglichst dicht zueinander zu bewegen und sicher miteinander zu einer Funktions-Anordnung zu verkoppeln.

Die Erfindung ist dadurch gekennzeichnet, dass die Verstelleinheit mindestens zwei Führungen umfasst, die orthogonal zueinander angeordnet sind, wobei jeder Führung mindestens ein Antriebsmittel zugeordnet ist. Dies bietet den Vorteil dass die Zwischenplatte beliebig in jede Richtung der Horizontalen bewegbar ist.

Eine zweckmäßige Ausgestaltung der Erfindung zeichnet sich dadurch aus, dass das Chassis eine Chassihubeinrichtung aufweist, die zum vertikalen Ausrichten des Chassis relativ zu einem Untergrund ausgebildet und eingerichtet ist. Die Art der Funktionseinheit kann eine vertikale Ausrichtung des Chassis, des Aufliegers und/oder des Fahrzeuges notwendig machen. Ist die Funktionseinheit beispielsweise ein mobiles Lazarett, so ist es von Vorteil, wenn das Chassis in der Art vertikal ausgerichtet ist, dass die Funktionseinheit nicht zu einer Seite abfällt oder anders ausgedrückt in der Waage ist. Bildet der Untergrund beispielsweise eine Schräge, so kann die Chassishubeinrichtung das Chassis an der abfallenden Seite des Untergrundes anheben, so dass das Chassis die gewünschte Position erreicht. Mit anderen Worten kann das Chassis relativ zum Untergrund vertikal ausgerichtet werden. Mit dieser erfmdungsgemäßen Ausbildung ist es auf besonders einfache und sichere Weise möglich, das Niveau des Chassis individuell zu verändern, um Unebenheiten im Untergrund zur optimalen Kopplung zweier Fahrzeuge auszugleichen.

In einer zweckmäßigen Weiterbildung weist die Chassishubeinrichtung ein nach unten schwenkbares und arretierbares Hubmittel auf. Das Hubmittel kann beispielsweise ein Hydraulikzylinder sein. Das Hubmittel kann aber auch eine translatorisch und/oder rotatorisch, vorzugsweise teleskopartig verstellbare Pneumatik-, Hydraulik- und/oder Motoreinheit sein. Andere übliche Mittel zum Heben sind ebenfalls einsetzbar. Zum Schwenken kann ein Ende des Hubmittels drehbar gelagert mit dem Chassis verbunden sein. Diese Lagerung kann ebenfalls zur Arretierung ausgebildet und/oder ausgestaltet sein. Andere übliche Arretierungsmittel zum Arretieren des Hubmittels sind aber ebenfalls einsetzbar. In einer besonders bevorzugten Ausgestaltung weist die Chassishubeinrichtung vier Hubmittel auf. Die Chassishubeinrichtung kann jedoch auch mehr oder weniger als vier Hubmittel aufweisen.

Eine weitere vorteilhafte Weiterbildung zeichnet sich dadurch aus, dass die Chassishubeinrichtung eine Hydraulikeinrichtung ist und ausschließlich zum vertikalen Ausrichten des Chassis gegenüber dem Untergrund ausgebildet und eingerichtet ist. Mittels einer Hydraulikeinheit sind große Lasten über eine große Distanz sicher und zuverlässig bewegbar. Die Hydraulikeinrichtung kann ausschließlich zum vertikalen Anpassen und/oder Ausrichten des Chassis dienen. Da der Auflieger mit dem Chassis durch eine Linearführungseinrichtung verbunden ist, kann somit auch der Verbund aus Chassis und Auflieger durch die Chassishubeinrichtung beziehungsweise mittels der Hydraulikeinrichtung vertikal angepasst und/oder ausgerichtet werden.

Eine vorteilhafte Weiterbildung zeichnet sich dadurch aus, dass die Hydraulikeinrichtung der Chassishubeinrichtung als eine Vier-Punkt-Lagerung ausgebildet ist. Damit ist nicht nur eine gleichmäßige und parallele Vertikalverschiebung möglich. Vielmehr gewährleistet die genannte Lagerung auch ein Kippen oder ein Anwinkeln des Chassis und/oder des Aufliegers, wodurch die Verstellmöglichkeiten erweitert und verbessert sind. Alternativ kann die Hydraulikeinrichtung der Chassishubeinrichtung auch als eine Drei-Punkt-Lagerung oder als eine Lagerung mit mehr als vier Punkten ausgebildet sein. Grundsätzlich kann eine Lagerung mit mehr als drei Punkten vorteilhaft sein, wenn beispielsweise im Bereich von einem Lagerungspunkt der Untergrund "weich" ist. In diesem Fall können in diesem Bereich keine oder so gut wie keine Kräfte sicher übertragen werden. Ähnliches gilt, wenn die Lagerung in einem Punkt defekt ist oder ausfällt. Bei einer Lagerung mit mehr als vier Punkten kann die Verteilung der Lagerungspunkte in der Weise ausgestaltet sein, dass selbst bei dem Ausfall eines Lagerungspunktes das Fahrzeug kippstabil stehen bleibt.

In einer weiteren vorteilhaften Weiterbildung ist die Chassishubeinrichtung an eine Steuerung zum individuellen Steuern und/oder Regeln des Abstandes und/oder des Neigungswinkels zwischen dem Chassis und dem Untergrund angeschlossen. Vorteilhafterweise kann auch die Linearführungseinrichtung an die gleiche oder eine separate Steuerung zum individuellen Steuern und/oder Regeln des horizontalen Versatzes zwischen dem Auflieger und dem Chassis angeschlossen sein. Um eine möglichst exakte Positionierung des Fahrzeuges beziehungsweise des Aufliegers zu gewährleisten, sind die Hubmittel der Chassishubeinrichtung und/oder das Antriebsmittel der Linearführungseinrichtung individuell steuerbar und/oder regelbar. So können beispielsweise die Hubmittel der Chassishubeinrichtung gleichmäßig und parallel gesteuert werden, um das Chassis parallel gegenüber dem Untergrund anzuheben und somit den Abstand zu vergrößern. Die einzelnen Hubmittel der Chassishubeinrichtung können aber auch unterschiedlich durch die Steuerung angesteuert werden, so dass das Chassis kippt und ein Neigungswinkel zwischen dem Chassis und dem Untergrund erreicht wird. Durch die Steuerung kann somit der Abstand und/oder der Neigungswinkel zwischen dem Chassis und dem Untergrund beliebig eingestellt werden. Mittels der oder einer separaten Steuerung kann das Antriebsmittel der Linearführungseinrichtung derart gesteuert werden, dass sich der Auflieger gegenüber dem Chassis horizontal bewegt. Somit kann durch die Steuerung der horizontale Versatz beziehungsweise die horizontale Verschiebung zwischen dem Auflieger und dem Chassis durch die Steuerung gesteuert und/oder geregelt werden. Vorteilhafterweise weisen die Hydraulikeinrichtungen jeweils Hydraulikzylinder auf, die insbesondere individuell ansteuerbar sind.

Eine zweckmäßige Weiterbildung der Erfindung zeichnet sich dadurch aus, dass die Einrichtung eine separate Hubeinheit umfasst und dem Chassis zugeordnet ist. Separat bedeutet in diesem Zusammenhang, dass die Hubeinheit nicht spezifisch auf das Chassis abgestimmt und insbesondere nicht an die (Versorgungs-)Leitungen, Anschlüsse oder dergleichen des Chassis angeschlossen sein muss. Anders ausgedrückt kann jedes Chassis verwendet und vorzugsweise auch platzsparend und einfach nachgerüstet werden.

Vorteilhafterweise ist die Hubeinheit eine Hydraulikeinheit und ausschließlich zum vertikalen Ausrichten des Aufliegers gegenüber dem Chassis ausgebildet und eingerichtet. Mittels einer Hydraulikeinheit sind große Lasten über eine große Distanz sicher und zuverlässig bewegbar. Die Hydraulikeinheit dient ausschließlich dem vertikalen Anpassen/Ausrichten des Aufliegers. Dadurch, dass nur der Auflieger in vertikaler Richtung bewegt werden muss, ist die Belastung auf die Hubeinheit bzw. Hydraulikeinheit gegenüber herkömmlichen Systemen, bei denen das gesamte Fahrzeug bewegt wird, reduziert, wodurch die Genauigkeit und Sicherheit der Verstellung noch weiter verbessert ist.

Eine besonders bevorzugte Ausführungsform der Erfindung ist dadurch gekennzeichnet, dass die Hydraulikeinheit als 3-Punkt-Lager ausgebildet ist. Damit ist nicht nur eine gleichmäßige und parallel Vertikalverstellung möglich. Vielmehr gewährleistet die genannte Lagerung auch ein Kippen des Aufliegers gegenüber dem Chassis, wodurch die Verstellmöglichkeiten erweitert und verbessert werden.

Eine weitere zweckmäßige Ausgestaltung der Erfindung zeichnet sich dadurch aus, dass die Verstelleinheit eine zwischen dem Chassis und dem Auflieger horizontal bewegbare Zwischenplatte umfasst. Dies bietet einerseits den Vorteil, dass der Auflieger bzw. die Funktionseinheit beliebig in jede horizontale Richtung bewegbar ist. Andererseits kann so eine Vielzahl unterschiedlicher Auflieger ohne besondere Anpassmaßnahmen zum Einsatz kommen, da diese nicht speziell an die Verstelleinheit angepasst werden müssen. Aufgrund der direkten Anordnung des Aufliegers auf der Zwischenplatte, wird der Auflieger beim Bewegen der Zwischenplatte unmittelbar mitbewegt.

Gemäß einer bevorzugten Weiterbildung der Erfindung umfasst die Verstelleinheit einen ortsfest an dem Chassis angeordneten Rahmen mit zumindest einem Gleitbereich, auf dem die Zwischenplatte unter Bildung eines Auflagers gleitend gelagert angeordnet ist. Somit ist die Zwischenplatte auf dem Rahmen in alle horizontalen Richtungen bewegbar gelagert. Zusätzlich wird mittels der Gleitbereiche zugleich eine Reduktion der Reibung zwischen der Unterseite der Zwischenplatte und dem Rahmen erzielt.

Gemäß einer weiteren vorteilhaften Ausgestaltung der Erfindung umfasst jede Führung ein an der Unterseite der Zwischenplatte angeordnetes Leitelement und ein an dem Antriebsmittel angeordnetes Aufnahmeelement umfasst, wobei das Aufnahmeelement derart korrespondierend zu dem Leitelement ausgebildet und eingerichtet ist, dass das Leitelement form- und/oder kraftschlüssig in das Aufnahmeelement eingreift. Dies gewährleistet eine zuverlässig Kraftübertragung einer Antriebskraft von dem Antriebselement auf die Zwischenplatte.

Eine bevorzugte Ausbildung der Erfindung zeichnet sich dadurch aus, dass jedes Antriebsmittel eine Hydraulikeinheit ist. Dies bietet den Vorteil, dass die Antriebsmittel an das am Fahrzeug vorhandene Hydrauliksystem angeschlossen werden können.

Gemäß einer bevorzugten Weiterbildung der Erfindung ist dem Auflieger zumindest eine lösbare angeordnete Hubeinrichtung zugeordnet, die ausschließlich zum vertikalen Abheben des Aufliegers von der Zwischenplatte und umgekehrt ausgebildet und eingerichtet ist. Mit anderen Worten wird mittels der Hubeinrichtung der Auflieger gegenüber dem Untergrund abgestützt und soweit von der Zwischenplatte angehoben, dass diese vollständig freikommt. Das Fahrzeug mit dem Chassis kann anschließend unter dem mittels der Hubeinrichtung abgestützten Auflieger herausgefahren werden. Umgekehrt kann das Fahrzeug mit dem Chassis unter den Auflieger gefahren und der Auflieger anschließend mittels der Hubeinrichtung auf die Zwischenplatte abgesenkt werden.

Eine weitere zweckmäßige Ausbildung der Erfindung zeichnet sich dadurch aus, dass die lösbar angeordnete Hubeinrichtung eine zumindest im Wesentlichen vertikal anordenbare Hydraulikeinrichtung, die mittels eines zumindest im wesentlichen horizontal ausgerichteten Stützelements seitlich mit dem Auflieger verbindbar ist, umfasst. So wird ein entsprechender Bewegungsfreiraum sichergestellt, um das Fahrzeug beim Herausfahren unter dem Auflieger manövrieren zu können.

Gemäß einer bevorzugten Weiterbildung der Erfindung ist an der Funktionseinheit zumindest ein lösbarer Dichtrahmen angeordnet, wobei der Dichtrahmen als dichtendes Element zwischen zwei seitlich benachbarten Funktionseinheiten ausgebildet und eingerichtet ist. Die Dichtrahmen können so modular, vorzugsweise nur an den entsprechenden Verbindungsbereichen zwischen zwei Funktionseinheiten angeordnet werden, so dass eine sehr dichte und kompakte Anordnung mehrer Fahrzeuge bzw. Funktionseinheiten ermöglicht wird.

Weitere zweckmäßige und/oder vorteilhafte Merkmale und Weiterbildungen der Erfindung ergeben sich aus den Unteransprüchen und der Beschreibung. Weitere bevorzugte Ausführungsformen werden anhand der beigefügten Zeichnung näher erläutert. In der Zeichnung zeigt:
- Fig. 1: eine schematische Darstellung eines erfindungsgemäßen Fahrzeugs mit einem leicht gegenüber dem Chassis angehobenen Auflieger in perspektivischer Ansicht gemäß einer ersten Ausführung,
- Fig. 2: eine schematische Darstellung des in Figur 1 dargestellten Fahrzeugs mit stark angehobenem Auflieger,
- Fig. 3: eine schematische Darstellung des in Figur 1 darstellten Fahrzeugs mit einem gegenüber dem Chassis gekippten Auflieger, und
- Fig. 4: eine Funktions-Anordnung aus mehreren der zuvor dargestellten Fahrzeuge z.B. als mobiles und flexibles Hospital,
- Fig. 5: eine schematische Darstellung eines erfindungsgemäßen Fahrzeuges in perspektivischer Ansicht gemäß einer zweiten Ausführung,
- Fig. 6: eine schematische Darstellung des in Fig. 5 dargestellten Fahrzeuges mit angehobenem Chassis,
- Fig. 7: eine schematische Darstellung des in Fig. 5 dargestellten Fahrzeuges mit einem gegenüber dem Chassis versetzten Auflieger,
- Fig. 8: eine schematische Darstellung eines erfindungsgemäßen Fahrzeuges mit einem Lastcontainer als Funktionseinheit gemäß der zweiten Ausführung,
- Fig. 9: eine schematische Darstellung des in Fig. 8 dargestellten Fahrzeuges mit einem angehobenen Chassis und dem Lastcontainer mit Containerstelzen,
- Fig. 10: eine schematische Darstellung des in Fig. 8 dargestellten Fahrzeuges mit abgesenktem Chassis, und
- Fig. 11: eine Funktions-Anordnung aus mehreren der in den Figuren 5 bis 10 gezeigten Fahrzeugen,
- Fig. 12: eine schematische Seitenansicht eines erfindungsgemäßen Fahrzeugs gemäß einer dritten Ausführung,
- Fig. 13: eine schematische Ansicht der Einrichtung zum Verändern der Position des Aufliegers des in Fig. 12 dargestellten Fahrzeugs,
- Fig. 14: eine schematische Teilansicht des in Fig. 12 dargestellten Fahrzeugs,
- Fig. 15: eine schematische Darstellung der Verstelleinheit gemäß der dritten Ausführung,
- Fig. 16: eine schematische Darstellung der Kopplung von zwei erfindungsgemäßen Fahrzeugen,
- Fig. 17: eine Funktions-Anordnung aus mehreren der zuvor dargestellten Fahrzeuge,
- Fig. 18: eine Darstellung der herausnehmbaren Seitenwände der zuvor dargestellten Fahrzeuge, und
- Fig. 19, 20: Darstellungen zum Prinzip der Herausnahme der in Fig. 18 dargestellten Seitenwände.

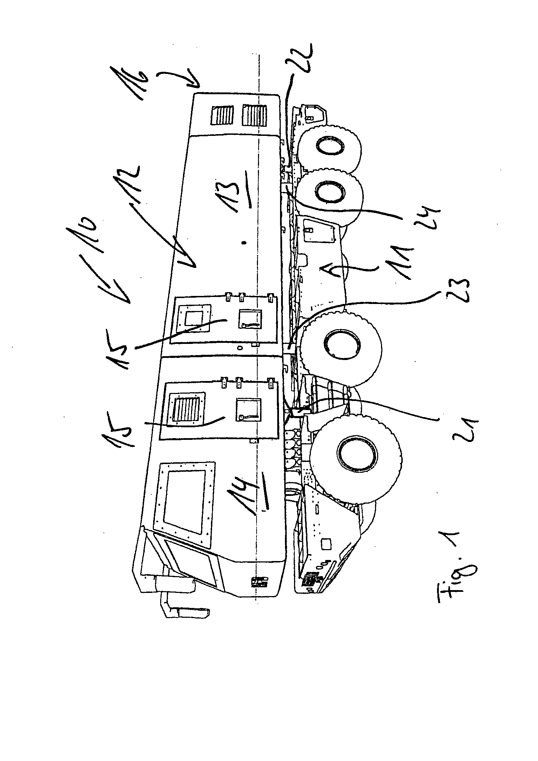

Die in den Figuren 1 bis 4 dargestellten Fahrzeuge 10 gemäß einer ersten Ausführung sind in modularer Bauweise zusammengestellt. Jedes Fahrzeug 10 umfasst ein Chassis 11 und einen vollständig vom Chassis 11 lösbaren Auflieger 12. Die modulare Bauweise des Fahrzeugs 10 einerseits und die lösbare Verbindung zwischen dem Chassis 11 und dem Auflieger 12 andererseits beschreibt, dass die Fahrzeuge 10 nicht nur zu Montagezwecken, sondern insbesondere auch zum Wechseln der Auflieger 12 je nach Anwendungszweck ausgebildet und eingerichtet sind. Die Auflieger 12 umfassen dabei nicht nur eine Funktionseinheit 13, wie z.B. einen Container, sondern auch eine Fahrerkabine 14.

Die Fahrerkabine 14 kann optional auch noch mit der Funktionseinheit 13 derart verbunden sein, dass von der Fahrerkabine 14 zur Funktionseinheit 13 und umgekehrt Zutritt möglich ist. Die Fahrerkabine 14 und die Funktionseinheit 13 weisen nach außen jeweils mindestens eine Tür 15 oder andere geeignete Zutrittsmöglichkeiten, wie z.B. eine Schleuse oder dergleichen, auf. Vorzugsweise weist die Fahrerkabine 14 zu beiden Seiten jeweils eine Tür 15 auf. Die Funktionseinheit 13 weist vorzugsweise ebenfalls zu beiden Seiten jeweils mindestens eine Tür 15 und zusätzlich am Heck 16 eine Tür 15 auf. Die Fahrzeuge 10 sind insbesondere dazu ausgebildet und eingerichtet, dass sie aneinander koppelbar sind, derart, dass zwei Türen 15 aneinander stehender Fahrzeuge 10 in Überdeckung sind, so dass ein Übergang von Fahrzeug 10 zu Fahrzeug 10 gewährleistet ist. Die Kopplung solcher Fahrzeuge 10 ist grundsätzlich bekannt, so dass auf eine detaillierte Beschreibung der Koppelmechanismen verzichtet wird.

Jedem Fahrzeug 10 ist erfindungsgemäß eine Einrichtung 17 zugeordnet, die zum Verändern der Position des Aufliegers 12 zum Chassis 11 ausgebildet und eingerichtet ist. Vorzugsweise umfasst die Einrichtung 17 eine separate Hubeinheit 18, die dem Chassis 11 zugeordnet ist. Die Hubeinheit 18 kann alternativ aber auch dem Auflieger 12 zugeordnet sein. Der Vorteil einer separaten, also vom Chassistyp unabhängigen Hubeinheit 18 besteht insbesondere darin, dass diese auch nachrüstbar ist. Besonders bevorzugt ist eine Ausbildung der Hubeinheit 18 als Hydraulikeinheit 19, die ausschließlich zum vertikalen Ausrichten des Aufliegers 12 gegenüber dem Chassis 11 ausgebildet und eingerichtet ist. Anstelle der Hydraulikeinheit 19 kann auch eine Pneumatikeinheit eingesetzt werden. Alternativ besteht auch die Möglichkeit, dass die Hubeinheit 18 motorisch verstellbar ist.

In einer bevorzugten Ausführungsform der Erfindung weist die Hydraulikeinheit 19 drei Hydraulikzylinder 20, 21, 22 zur Bildung eines 3-Punkt-Lagers auf. Selbstverständlich sind auch mehr Hydraulikzylinder 20 bis 22, nämlich insbesondere vier Hydraulikzylinder einsetzbar. Die Lage bzw. Position der Hydraulikzylinder 20 bis 22 ist variabel. In der gezeigten Ausführungsform sind zwei Hydraulikzylinder 20, 21 unterhalb der Fahrerkabine 14 symmetrisch zur Mittelachse des Fahrzeugs 10 angeordnet, während unterhalb der Funktionseinheit 13 ein Hydraulikzylinder 22 zentral auf der Mittelachse angeordnet ist. Die Hydraulikzylinder 20 bis 22 sind einerseits am Chassis 11 fest und andererseits am Auflieger 12 befestigt. Die Befestigung selbst kann fest und insbesondere starr, zu Ausgleichszwecken aber auch mindestens teilweise gelenkig, ausgebildet sein. Die Anordnung/Platzierung der Hydraulikzylinder 20 bis 22 sowie deren Befestigung am Chassis 11 und Auflieger 12 kann selbstverständlich ebenfalls variieren.

Die Einrichtung 17, also insbesondere auch die Hydraulikeinheit 19, ist an eine (nicht dargestellte) Steuerung angeschlossen. Mittels der Steuerung ist der Abstand zwischen dem Chassis 11 und dem Auflieger 12 individuell steuerbar und/oder regelbar. Um eine möglichst exakte Positionierung der Fahrzeuge 10 zueinander zu gewährleisten, sind die Hydraulikzylinder 20 bis 22 individuell ansteuerbar. Die notwendigen Informationen (z.B. Abstand zum anderen Fahrzeug, Winkelversatz, Höhendifferenz etc.), die die Steuerung zur Veränderung der Lage/Position des Aufliegers 12 zum Chassis 11 benötigt, um ein erstes Fahrzeug 10 exakt an ein anderes Fahrzeug 10 zu koppeln, können durch eine Bedienperson visuell und/oder über geeignete Hilfsmittel, wie z.B. Sensoren oder dergleichen ermittelt werden. Optional kann dem Chassis 11 und/oder dem Auflieger 12 vorzugsweise im Bereich des Hecks 16 auch eine Kamera oder dergleichen zugeordnet sein. Besondern bevorzugt ist die Steuerung mittels einer Fernsteuerungseinheit fernsteuerbar.

Neben der Verstelleinheit (Hubeinheit 18) zum vertikalen Verstellen der Lage/Position des Aufliegers 12 zum Chassis 11 umfasst die Einrichtung 17 optional auch eine (nicht dargestellte) Verstelleinheit zum horizontalen Verstellen der Lage/Position des Aufliegers 12 zum Chassis 11. Dazu weist die Verstelleinheit z.B. entsprechende Führungen und Antriebsmittel auf. Die Verstelleinheit für die Horizontalverstellung kann zum linearen und/oder rotatorischen Verstellen als Pneumatik-, Hydraulik- oder Motoreinheit ausgebildet und eingerichtet sein. Andere übliche Verstellmechanismen sind aber ebenfalls einsetzbar.

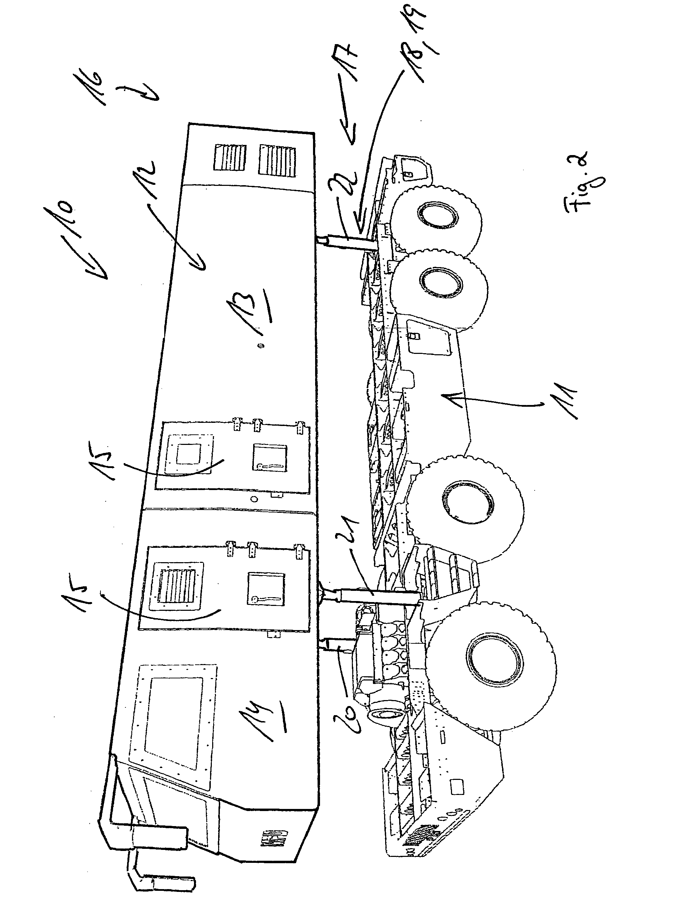

Wie in Figur 1 dargestellt, kann die Lastaufnahme des Aufliegers 12 neben den Hydraulikzylindern 20 bis 22 durch zusätzliche Mittel erfolgen. Beispielsweise sind zwischen dem Chassis 11 und dem Auflieger 12 ein, vorzugsweise jedoch zwei Stütz- und/oder Führungselemente 23, 24 vorgesehen, die die Hydraulikzylinder 20 bis 22 entlasten. Bevorzugt liegen die beiden Stütz- und/oder Führungselemente 23, 24 auf der Mittelachse des Fahrzeugs 10. Selbstverständlich kann die Anzahl und/oder Lage der Stütz- und/oder Führungselemente 23, 24 variieren. Die Stütz- und/oder Führungselemente 23, 24 können teleskopartig z.B. ebenfalls hydraulisch, pneumatisch oder motorisch unterstützt sein. Optional kann auf die Stütz- und/oder Führungselemente 23, 24 auch verzichtet werden (siehe z.B. Figur 2).

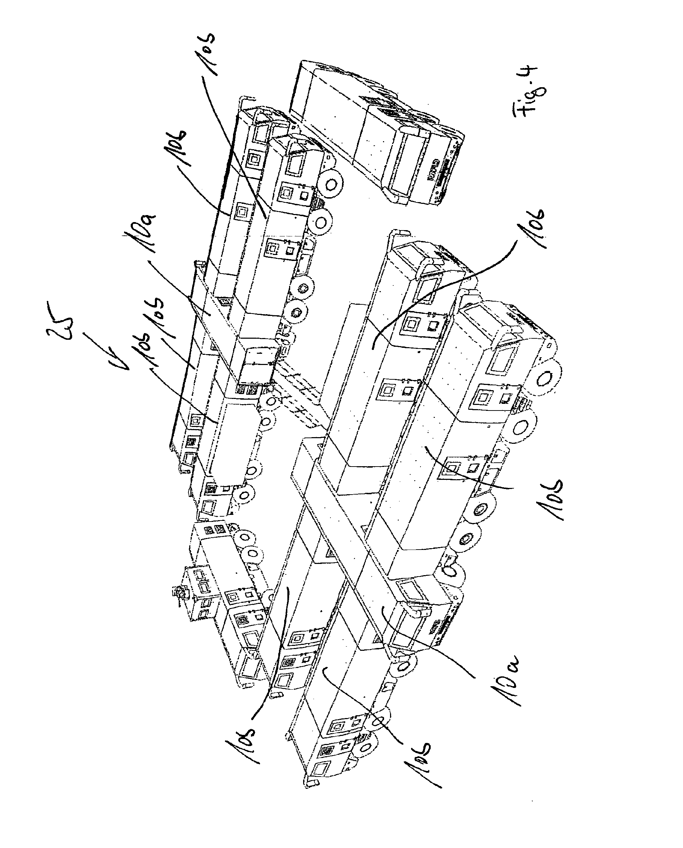

In der Figur 4 ist eine beliebige Funktions-Anordnung 25 mehrerer Fahrzeuge 10 dargestellt. Dabei sind jeweils vier Fahrzeuge 10b an ein Zentral-Fahrzeug 10a heckseitig angekoppelt. Die Funktions-Anordnung 25 kann z.B. ein zusammenstellbares Hospital sein. Diese Anordnung 25 stellt eine geschützte und mobile Einrichtung aus mehreren der oben beschriebenen (Großraum-)Fahrzuge 10 dar. Die Schutzklassen der Fahrzeuge 10 bzw. der daraus gebildeten Anordnungen 25, also z.B. der ABC-Schutz oder dergleichen, können je nach Einsatzfall variieren.

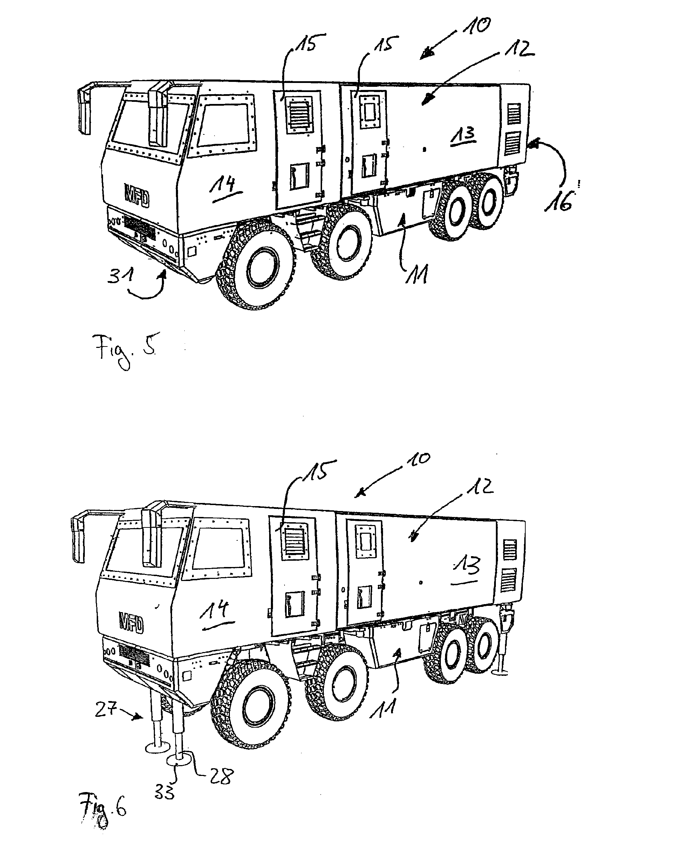

Die in den Figuren 5 bis 11 dargestellten Fahrzeuge 10 gemäß einer zweiten Ausführung sind in modularer Bauweise zusammengestellt. Jedes Fahrzeug 10 umfasst ein Chassis 11 und einen Auflieger 12. Der Auflieger 12 umfassen dabei nicht nur eine Funktionseinheit 13, wie z.B. einen Container, sondern auch eine Fahrerkabine 14. Der Funktionsaufbau 13 kann vollständig vom Chassis 11 lösbar ausgebildet sein. Aber auch der Auflieger 12 kann vollständig vom Chassis 11 lösbar sein. Die modulare Bauweise des Fahrzeugs 10 einerseits und die lösbare Verbindung zwischen dem Chassis 11 und dem Funktionsaufbau 13 bzw. dem Auflieger 12 andererseits beschreibt, dass die Fahrzeuge 10 nicht nur zu Montagezwecken, sondern insbesondere auch zum Wechseln des Funktionsaufbaus bzw. des Aufliegers 12 je nach Anwendungszweck ausgebildet und eingerichtet sein können.

Die in den Figuren 5 bis 7 dargestellte Fahrerkabine 14 kann optional auch noch mit der Funktionseinheit 13 derart verbunden sein, dass von der Fahrerkabine 14 zur Funktionseinheit 13 und umgekehrt Zutritt möglich ist. Die Fahrerkabine 14 und die Funktionseinheit 13 können nach außen jeweils mindestens eine Tür 15 oder andere geeignete Zutrittsmöglichkeiten, wie z.B. eine Schleuse oder dergleichen, aufweisen. Vorzugsweise weist die Fahrerkabine 14 zu beiden Seiten jeweils eine Tür 15 auf. Die Funktionseinheit 13 weist vorzugsweise ebenfalls zu beiden Seiten jeweils mindestens eine Tür 15 und zusätzlich am Heck 16 eine Tür 15 auf. Die Fahrzeuge 10 sind insbesondere dazu ausgebildet und eingerichtet, dass sie aneinander koppelbar sind, derart, dass zwei Türen 15 aneinander stehender Fahrzeuge 10 in Überdeckung sind, so dass ein Übergang von einem Fahrzeug 10 zu einem anderen Fahrzeug 10 gewährleistet ist. Die Kopplung solcher Fahrzeuge 10 ist grundsätzlich bekannt, so dass auf eine detaillierte Beschreibung der Koppelmechanismen verzichtet wird.

Das Chassis 11 weist eine Chassishubeinrichtung 27 auf, die zum vertikalen Ausrichten des Chassis 11 relativ zu einem Untergrund ausgebildet und eingerichtet ist. In einer bevorzugten Ausgestaltung weist die Chassishubeinrichtung 27 ein nach unten schwenkbares und arretierbares Hubmittel 28 auf. Besonders bevorzugt ist dieses Hubmittel 28 ein Hydraulikzylinder.

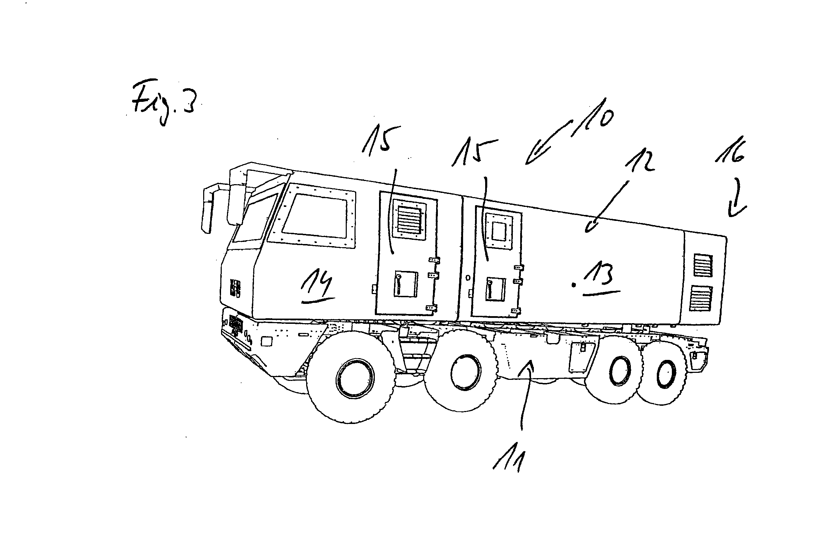

Des Weiteren weist das Fahrzeug 10 zwischen dem Chassis 11 und dem Auflieger 12 eine Linearführungseinrichtung 29 als eine lastaufnehmende Verbindung zwischen dem Auflieger 12 und dem Chassis 11 auf, die zum horizontalen Ausrichten des Aufliegers 12 relativ zum Chassis 11 ausgebildet und eingerichtet ist. Mittels der Linearführungseinrichtung 29 kann der Auflieger 12 relativ zum Chassis 11 horizontal bewegt werden. In Fig. 3 ist ein um einen Versatz 30 relativ zum Chassis 11 horizontal versetzter Auflieger 12 dargestellt. Mit anderen Worten ist der Auflieger 12 relativ zum Chassis 11 horizontal ausgerichtet. Die Ausrichtung hat dabei zu dem Versatz 30 geführt.

Die schwenkbaren Hubmittel 28 der Chassishubeinrichtung 27 können für den Fahrbetrieb des Fahrzeuges 10 in den Unterboden 31 des Chassis 11 geschwenkt werden. Im Standbetrieb oder zum Koppeln des Fahrzeuges an ein anderes Fahrzeug können die Hubmittel 28 der Chassishubeinrichtung 27 aus dem Unterboden 31 des Chassis 11 herausgeschwenkt werden. Sobald die Hubmittel 28 zumindest im Wesentlichen senkrecht zum Chassis 11 angeordnet sind, können diese arretiert werden. Mit anderen Worten können die Hubmittel 27 aus dem Unterboden 31 des Chassis 11 herausschwenkbar und/oder in den Unterboden hineinschwenkbar ausgestaltet sein.

Die Chassishubeinrichtung 27 kann eine Hydraulikeinheit mit vier Hydraulikzylindern 32 zur Bildung einer Vier-Punkt-Lagerung aufweisen. Selbstverständlich sind auch drei Hydraulikzylinder 32 oder auch mehr als vier Hydraulikzylinder 32, nämlich insbesondere fünf, sechs, sieben oder acht Hydraulikzylinder 32 einsetzbar. Die Lage und Position der Hydraulikzylinder 32 ist variabel. In der gezeigten Ausführungsform sind vier Hydraulikzylinder 32 unterhalb des Chassis 11 symmetrisch zur Längs- und Querachse des Fahrzeuges 10 angeordnet. Die Hydraulikzylinder 32 sind zumindest mit einem Ende drehbar gelagert an dem Chassis 11 befestigt und weisen auf dem gegenüberliegenden Ende einen Standfuß 33 auf. Sowohl die Anordnung/Platzierung der Hydraulikzylinder 32 als auch deren Befestigung am Chassis 11 kann variieren.

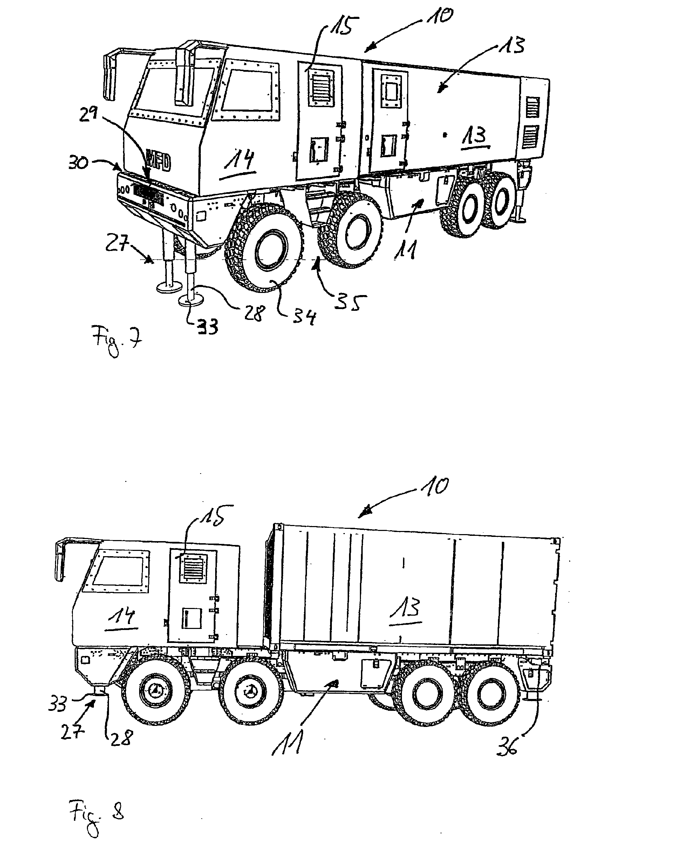

Wie in Fig. 7 dargestellt kann die Linearführungseinrichtung 29 derart in das Chassis 11 und/oder den Auflieger 12 integriert sein und/oder flach ausgestaltet sein, dass das Chassis 11 und der Auflieger 12 zumindest im Wesentlichen abstandsfrei verbunden sind. Diese Ausgestaltungen sind insbesondere im Bereich der Fahrerkabine 14 sichtbar. Die Fahrerkabine 14 ist so dicht an dem Chassis angeordnet, dass es fast auf diesem aufliegt. Somit ist es kaum möglich, dass Fremdkörper zwischen dem Auflieger und dem Chassis eindringen.

Die Chassishubeinrichtung 27 und die Linearführungseinrichtung 29 können jeweils an eine Steuerung angeschlossen sein. Mit der Steuerung kann der Abstand und/oder der Neigungswinkel zwischen dem Chassis 11 und einem Untergrund gesteuert und/oder geregelt werden. Ferner kann mittels der Steuerung der horizontale Versatz 30 zwischen dem Auflieger 12 und dem Chassis 11 gesteuert und/oder geregelt werden. Der Abstand, der Neigungswinkel und/oder der horizontale Versatz können auch individuell und/oder unabhängig voneinander steuerbar und/oder regelbar sein. Dazu können die Chassishubeinrichtung 27 und/oder die Linearführungseinrichtung 29 auch fernsteuerbar sein. Das Hubmittel 28 und/oder das Antriebsmittel der Linearführungseinrichtung 29 können mittels Steuerung steuerbar sein. Somit können mittels der Steuerung und der Chassishubeinrichtung 27 sowie der Linearführungseinrichtung 29 das Chassis relativ zum Untergrund vertikal ausgerichtet werden beziehungsweise der Auflieger relativ zum Chassis horizontal ausgerichtet werden. Um hierbei eine möglichst exakte Positionierung zu gewährleisten, kann die Steuerung mit Geometriesensoren verbunden sein. Diese Sensoren können am Fahrzeug angebracht sein, um beispielsweise den Abstand zu einem anderen Fahrzeug, den Winkelversatz zwischen dem Chassis und dem Untergrund oder ein Winkelversatz zwischen dem Fahrzeug und einem anderen Fahrzeug, die Höhendifferenz zwischen zwei Fahrzeugen oder andere geometrische Daten zu messen. Diese Messdaten können durch entsprechende Leitungs- und/oder Funkverbindungen zu der Steuerung übermittelbar sein. Die Steuerung kann diese Daten empfangen, auswerten und entsprechende Signale ausgeben, um die Lage und/oder Position des Aufliegers relativ zum Chassis beziehungsweise die Lage des Chassis relativ zum Untergrund auszurichten, um das Fahrzeug an ein anderes Fahrzeug zu koppeln. Alternativ oder ergänzend können Eingabemittel vorgesehen sein, um die Chassishubeinrichtung 27 und/oder die Linearführungseinrichtung 29 manuell zu steuern. Optional können dem Chassis 11 und/oder dem Auflieger 12 vorzugsweise im Bereich des Hecks 16 eine Kamera und/oder ein Drucksensor angeordnet sein. Diese können ebenfalls mit der Steuerung verbunden sein.

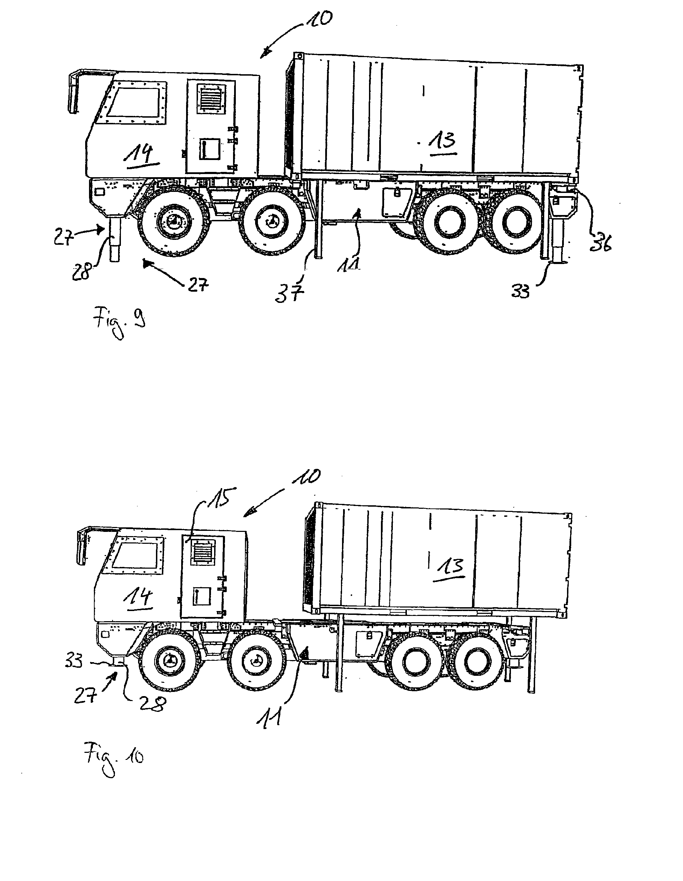

In den Fig. 8 bis 10 ist das erfindungsgemäße Fahrzeug 10 mit einem Container als Funktionsaufbau 13 dargestellt. Dabei kann die Linearführungseinrichtung auch Schnellverbindungsmittel 36 aufweisen, um Container, vorzugsweise handelsübliche Industriecontainer, mit der Linearführungseinrichtung zu verbinden. Wie in Fig. 5 dargestellt, können solche Container auch Containerstelzen 37 aufweisen. Um diese Containerstelzen 37 fest mit dem Container 13 zu verbinden, muss das Fahrzeug 10 mittels der Chassishubeinrichtung 27 stark angehoben werden. Sobald die Containerstelzen 37 unter oder an dem Container befestigt sind, kann das Chassis 11 mit der Chassishubeinrichtung 27 so weit abgesenkt werden, dass die Containerstelzen 37 den Untergrund berühren. Daraufhin können die Schnellverbindungsmittel 36 der Linearführungseinrichtung von dem Container 13 gelöst werden. Die Verbindung zwischen dem Container 13 und der Linearführungseinrichtung ist somit aufgelöst, so dass das Chassis 11 mittels der Chassishubeinrichtung 27 vollständig abgesenkt werden kann. Grundsätzlich können die Hubmittel 28 der Chassishubeinrichtung 27 teleskopartig ausgestaltet sein. Somit können die Hubmittel 28 so weit eingezogen werden, dass die Reifen 34 des Chassis 11 den Untergrund berühren und das Chassis 11 als solches tragen. Aufgrund des Absenkens des Chassis 11 ist dieses, wie in Fig. 10 gezeigt, von dem Container 13 getrennt, so dass das Fahrzeug 10 unter dem Container 13 herausfahren kann.

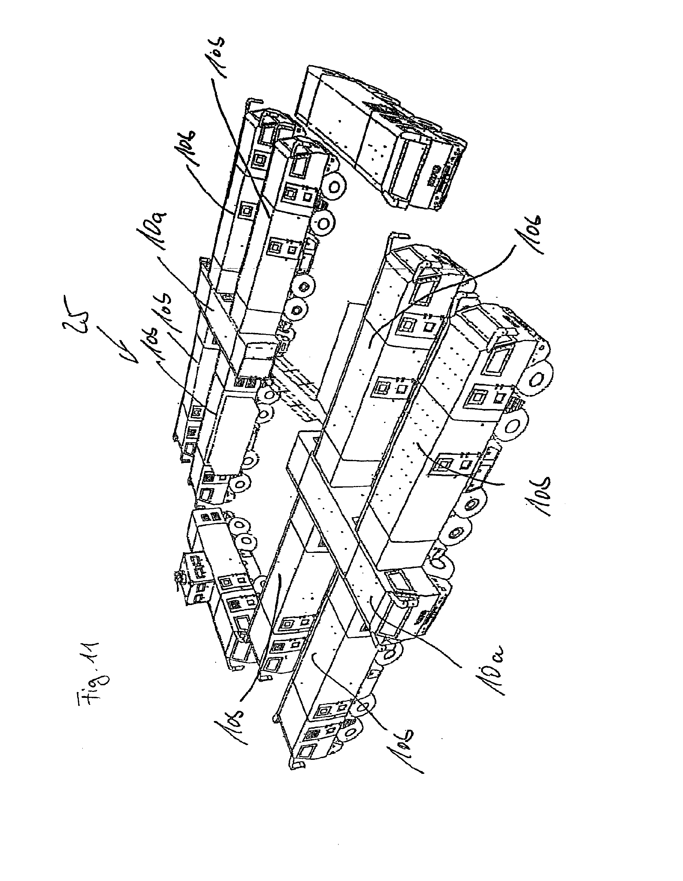

In der Figur 11 ist eine beliebige Funktions-Anordnung 25 mehrerer Fahrzeuge 10 dargestellt. Dabei sind jeweils vier Fahrzeuge 10b an ein Zentral-Fahrzeug 10a heckseitig angekoppelt. Die Funktions-Anordnung 25 kann z.B. ein zusammenstellbares Hospital sein. Diese Anordnung 25 stellt eine geschützte und mobile Einrichtung aus mehreren der oben beschriebenen Fahrzeuge 10 dar. Die Schutzklassen der Fahrzeuge 10 bzw. der daraus gebildeten Anordnungen 25, also z.B. der ABC-Schutz oder dergleichen, können je nach Einsatzfall variieren.

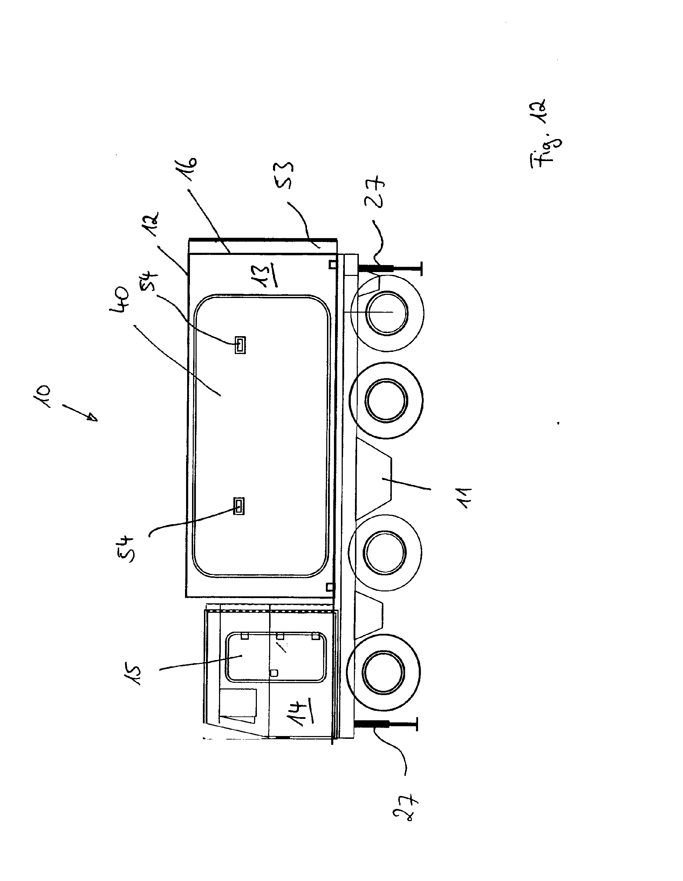

Die in den Figuren 12 bis 15 dargestellten Fahrzeuge gemäß einer dritten Ausführung der Erfindung sind ebenfalls in modularer Bauweise zusammengestellt. Jedes Fahrzeug 10 umfasst das Chassis 11 und den vollständig vom Chassis 11 lösbaren Auflieger 12. Die modulare Bauweise des Fahrzeugs 10 einerseits und die lösbare Verbindung zwischen dem Chassis 11 und dem Auflieger 12 andererseits beschreibt, dass die Fahrzeuge 10 nicht nur zu Montagezwecken, sondern insbesondere auch zum Wechseln der Auflieger 12 je nach Anwendungszweck ausgebildet und eingerichtet sind. Die Auflieger 12 können dabei entweder die Funktionseinheit 13, beispielsweise einen Container, oder aber zusätzlich auch die Fahrerkabine 14 umfassen. Die Fahrerkabine 14 kann optional auch noch mit der Funktionseinheit 13 derart verbunden sein, dass von der Fahrerkabine 14 zur Funktionseinheit 13 und umgekehrt Zutritt möglich ist. Die Fahrerkabine 14 und die Funktionseinheit 13 weisen nach außen jeweils mindestens eine Tür 15 oder andere geeignete Zutrittsmöglichkeiten, wie z.B. eine Schleuse oder dergleichen, auf. Vorzugsweise weist die Fahrerkabine 14 zu beiden Seiten jeweils eine Tür auf. Die Funktionseinheit 13 weist vorzugsweise ebenfalls zu beiden Seiten jeweils mindestens eine Tür 15 und zusätzlich am Heck 16 eine weitere Tür 15 auf. Die Fahrzeuge 10 sind insbesondere dazu ausgebildet und eingerichtet, dass sie aneinander koppelbar sind, derart, dass zwei Türen 15 aneinander stehender Fahrzeuge 10 in Überdeckung sind, so dass ein Übergang von Fahrzeug 10 zu Fahrzeug 10 gewährleistet ist. Das Fahrzeug 10 weist zusätzlich eine oder zwei herausnehmbare Seitenwände 40 auf. Die Fahrzeuge 10 an ihrer Längsseite miteinander zu der Funktion-Anordnung 25 verkoppelt werden, wobei zunächst die herausnehmbaren Seitenwände 40 zu entfernen sind. Jedem Fahrzeug 10 ist erfindungsgemäß eine Einrichtung 17 zugeordnet, die zum Verändern der Position des Aufliegers 12 relativ zum Chassis 11 ausgebildet und eingerichtet ist. Vorzugsweise umfasst die Einrichtung 17 eine Verstelleinheit 41 zum horizontalen Verstellen der Lage des Aufliegers 12 relativ zu dem Chassis 11. Die Verstelleinheit 41 weist dazu entsprechende Führungen und Antriebsmittel 42 auf. Mittels der Führungen und der Antriebsmittel 42 ist der Auflieger 12 bewegbar auf dem Chassis 11 angeordnet und kann in einer horizontalen Ebene gegenüber dem Chassis 11 bewegt bzw. verschoben werden. So ist es möglich, die Auflieger 12 zweier nebeneinander stehender Fahrzeuge 10 beliebig nahe aneinander zu bewegen und diese zu der Funktions-Anordnung 25 miteinander zu koppeln.

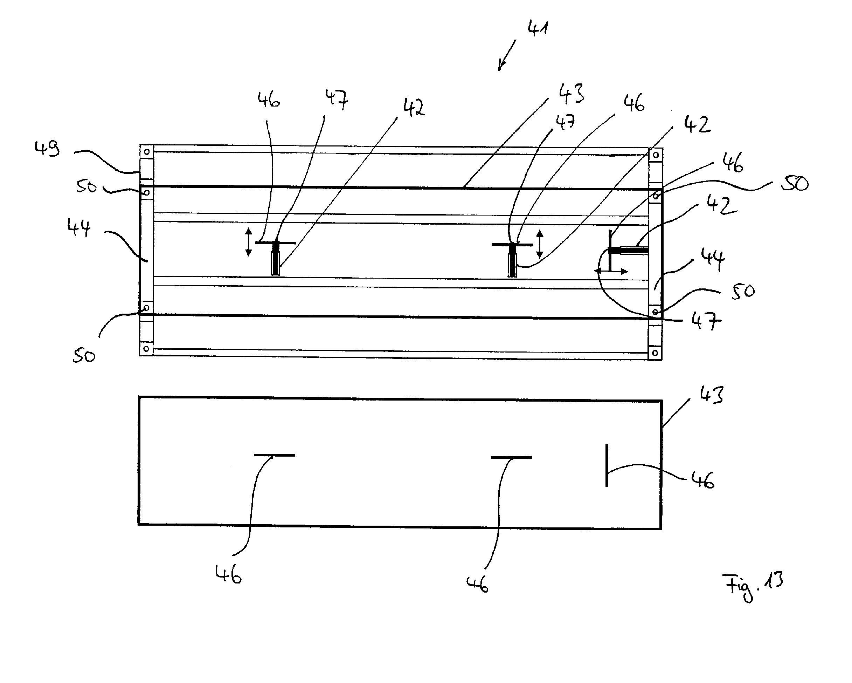

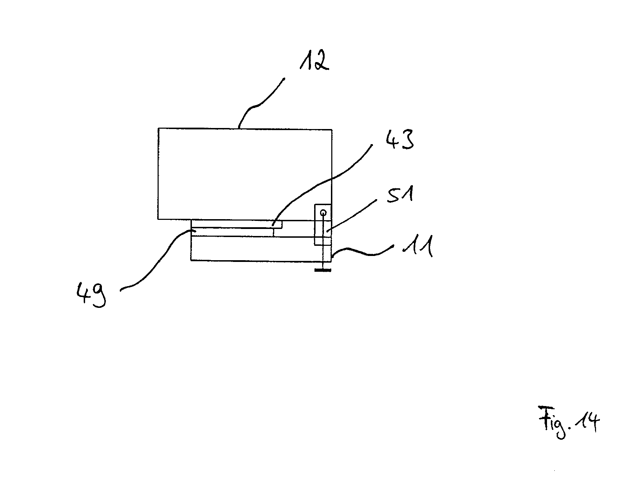

Wie in den Figuren 13 und 14 dargestellt, umfasst die Verstelleinheit 41 bevorzugt eine zwischen dem Chassis 11 und dem Auflieger 12 horizontal bewegbare Zwischenplatte 43. Mit anderen Worten liegt der Auflieger 12 auf der Zwischenplatte 43 auf. Durch Bewegen der Zwischenplatte 43 in horizontaler Richtung relativ zum Chassis 11, kann der Auflieger 12 gegenüber dem Chassis 11 frei ausgerichtet und positioniert werden. Vorzugsweise ist die Zwischenplatte 43 gleitend gelagert. Dazu umfasst die Verstelleinheit 41 einen ortsfest an dem Chassis 11 angeordneten Rahmen 49 mit zumindest einem Gleitbereich 44. Der Gleitbereich 44 bildet mit der Unterseite 45 der Zwischenplatte 43 ein Auflager. Vorzugsweise ist das Auflager als Gleitlager ausgebildet. Alternativ kann das Auflager auch als Kugel- oder Rollenlager eingerichtet sein. Bevorzugt weist die Verstelleinheit 41 mindestens zwei der Führungen sowie zwei der Antriebsmittel 42 auf. Besonders bevorzugt weist die Verstelleinheit 41 zwei Führungen auf, die zumindest im Wesentlichen in Richtung der Querachse des Fahrzeugs 10 angeordnet sind. Mittels dieser queraxial angeordneten Führungen und der den Führungen zugeordneten Antriebsmittel 42 ist die Zwischenplatte 43 und somit der Auflieger 12 quer zur Längsachse des Fahrzeugs 10 bewegbar. Anders ausgedrückt sind die queraxial angeordneten Führungen und Antriebsmittel 42 derart angeordnet und ausgerichtet, dass eine translatorische Bewegung der Zwischenplatte 43 ermöglicht wird. Darüber hinaus kann die Zwischenplatte 43 mittels der beiden queraxial angeordneten Führungen bzw. Antriebsmittel 42 gegenüber der Fahrzeuglängsachse gedreht werden, also rotatorisch bewegt werden. Zumindest eine weitere der Führungen bzw. ein weiteres der Antriebsmittel 42 ist orthogonal zu den erst genannten Führungen bzw. Antriebsmitteln 42 angeordnet, so dass die Zwischenplatte 43 zusätzlich in Richtung der Längsachse des Fahrzeugs 10 bewegbar ist. Anders ausgedrückt ist die Zwischenplatte 43 beliebig horizontal gegenüber dem Chassis 11 bewegbar, also sowohl translatorisch in Richtung der Längs- und Querachse des Fahrzeugs 10 als auch in einem gewissen Umfang rotatorisch bewegbar.

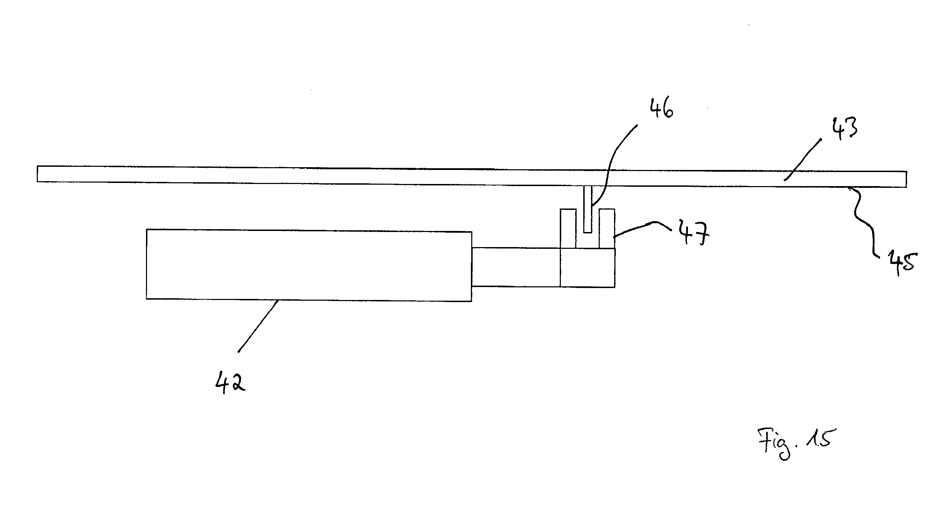

Jede der Führungen umfasst ein an der Unterseite 45 der Zwischenplatte 43 angeordnetes Leitelement 46 sowie ein an dem Antriebsmittel 42 angeordnetes Aufnahmeelement 47. Anders ausgedrückt wird die Führung aus einem Leitelement 46 und einem korrespondieren Aufnahmeelement 47 gebildet. Das Aufnahmeelement 47 ist dabei derart korrespondierend zu dem Leitelement 46 ausgebildet und eingerichtet, dass das Leitelement 46 form- und/oder kraftschlüssig in das Aufnahmeelement 47 eingreift. Mit anderen Worten ist das Aufnahmeelement 47 derart korrespondierend zu dem Leitelement 46 ausgebildet, dass dieses eine Kraft in einer Richtung von dem Antriebsmittel 42 auf das Leitelement 46 und damit auf die Zwischenplatte 43 überträgt. Wie in der Fig. 15 gezeigt, ist das Leitelement 46 beispielsweise als Metallplatte ausgebildet, die ortsfest an der Unterseite 45 der Zwischenplatte 43 angeordnet ist. Das Aufnahmeelement 47 ist entsprechend U-förmig ausgebildet, so dass dieses einen Aufnahmeraum für das Leitelement 46 bildet. Wird mittels des Antriebsmittels 42 das Aufnahmeelement 47 in einer Richtung bewegt, wird durch den Eingriff des Leitelements 46 in das Aufnahmeelement 47 die Zwischenplatte 43 zugleich in dieser Richtung bewegt. Um eine Bewegung der Zwischenplatte 43 in eine andere Richtung, beispielsweise aus der Zeichenebene heraus oder in diese hinein, zu ermöglichen, ist die Verbindung zwischen dem Aufnahmeelement 47 und dem Leitelement 46 spielbehaftet ausgebildet. Zwischen dem Leitelement 46 und dem Aufnahmeelement 47 verbleibt also ein Spiel, so dass die Zwischenplatte 43 in der jeweils anderen Richtung frei bewegbar ist und zugleich zumindest eine Teilrotation der Zwischenplatte 43 ausführbar ist. Vorzugsweise sind die beiden freien Schenkel des Aufnahmeelements 47 als Rollen ausgebildet. Besonders bevorzugt ist das Antriebsmittel 42 eine Hydraulikeinheit. Als Antriebsmittel 42 kann jedoch alternativ jeder andere übliche Antrieb verwendet werden, beispielsweise eine elektromotorische Antriebseinheit oder dergleichen. Um die Zwischenplatte 43 und den Auflieger 12 gegen ein Verrutschen während der Fahrt zu sichern, weisen der Rahmen 49, die Zwischenplatte 43 und der Auflieger 12 korrespondierende Ausnehmungen 50 zur Aufnahme von Sicherungsmitteln auf. Als Sicherungsmittel dienen beispielsweise mit einem Sicherungssplint versehene Bolzen oder Gewindebolzen mit einer Sicherungsmutter. Im Stand des Fahrzeugs 10 werden die Sicherungsmittel vor dem Bewegen der Zwischenplatte 43 bzw. des Aufliegers 12 entfernt.

Zur Kopplung zweier bzw. mehrere der Fahrzeuge 10 ist es erforderlich, die Auflieger 12 in der Vertikalen auszurichten und auf ein gleiches Höhenniveau anzuheben. Dazu umfasst jedes der Fahrzeuge 10 die Chassishubeinrichtung 27, die bereits zuvor gemäß der zweiten Ausführung der Erfindung eingehend beschrieben worden ist. Vorzugsweise ist dem Auflieger 12 ferner zumindest eine lösbar angeordnete Hubeinrichtung 51 zugeordnet. Die Hubeinrichtung 51 ist beispielsweise derart steckbar ausgebildet, dass die Hubeinrichtung 51 seitlich an dem Auflieger 12 bzw. der Funktionseinheit 13 anbringbar ist. Nachdem zwei oder mehrere der Fahrzeuge 10 mittels der Chassishubeinrichtung 27 vertikal zueinander ausgerichtet worden sind, werden die Hubeinrichtungen 51 an dem Auflieger 12 angeordnet und der Auflieger 12 so gegenüber dem Untergrund abgestützt. Die Hubeinrichtung 51 ist vorzugsweise ausschließlich zum vertikalen Abheben bzw. Anheben des Aufliegers 12 von der Zwischenplatte 43 ausgebildet und eingerichtet. Mit anderen Worten dient die Hubeinrichtung 51 dazu, den Auflieger 12 von der Zwischenplatte 43 durch Anheben zu lösen, so dass die Zwischenplatte 43 vollständig freikommt und das jeweilige Fahrzeug 10 unter dem Auflieger 12 herausgefahren werden kann. Zum Anheben des Aufliegers 12 bzw. der Funktionseinheit 13 umfasst die Hubeinrichtung 51 eine zumindest im Wesentlichen horizontal anordenbare Hydraulikeinrichtung. Besonders bevorzugt ist die Hydraulikeinrichtung in ihrer Länge verstellbar eingerichtet, so dass die Hydraulikeinrichtung an den jeweiligen Abstand zwischen dem Untergrund und dem Auflieger 12 anpassbar ist. Auf diese Weise ist zum Anheben des Aufliegers 12 von der Zwischenplatte 43 der erforderliche Arbeitsweg der Hydraulikeinrichtung auf ein Minimum reduziert. Die Hydraulikeinrichtung ist mittels eines zumindest im Wesentlichen horizontal ausgerichteten Stützelements seitlich mit dem Auflieger 12 verbindbar ausgebildet. Anders ausgedrückt ist die Hydraulikeinrichtung mittels des Stützelements beabstandet zu dem Auflieger 12 bzw. der Funktionseinheit 13 angeordnet. Die Hydraulikeinrichtung und das Stützelement bilden also eine winkelförmige Stützanordnung, so dass das Chassis 11 bzw. das Fahrzeug 10 unterhalb des mittels der Hydraulikeinrichtung angehobenen und von der Zwischenplatte 43 abgehobenen Aufliegers 12 berührungsfrei manövriert werden kann.

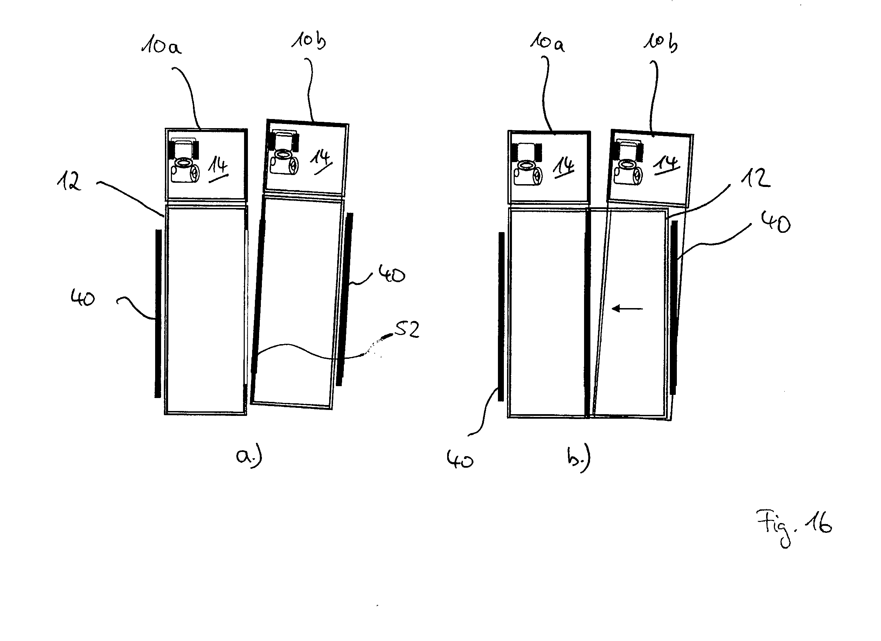

In der Fig. 16 ist der Kopplungsvorgang der Fahrzeuge 10 beispielhaft anhand zweier der Fahrzeuge 10 gezeigt. Gemäß Fig. 16a wird an ein erstes Fahrzeug 10a, dessen herausnehmbare Seitenwand 40 an einer Seite des Aufliegers 12 bzw. der Funktionseinheit 13 bereits entfernt worden ist, ein zweites Fahrzeug 10b gekoppelt. Dazu wird das zweite Fahrzeug 10b möglichst nahe mit seiner Längsseite an das erste Fahrzeug 10a herangefahren. Aufgrund eines einzuhaltenden Mindestabstands zwischen den Fahrzeugen 10a, 10b verbleibt ein keilförmiger Spalt zwischen beiden Fahrzeugen 10a, 10b. Mittels der vorgenannten Verstelleinheit 41 wird, wie in Fig. 16b gezeigt, der Auflieger 12 des zweiten Fahrzeugs 10b bündig an den Auflieger 12 des ersten Fahrzeugs 10a bewegt, so dass die Auflieger 12 beider Fahrzeuge 10a, 10b die Funktions-Anordnung 25 bilden, indem der Auflieger 12 über die sich durch die herausgenommene Seitenwand 40 ergebende Öffnung mittels eines Dichtelements 52 mit dem Auflieger 12 des zweiten Fahrzeugs 10b verbunden ist.

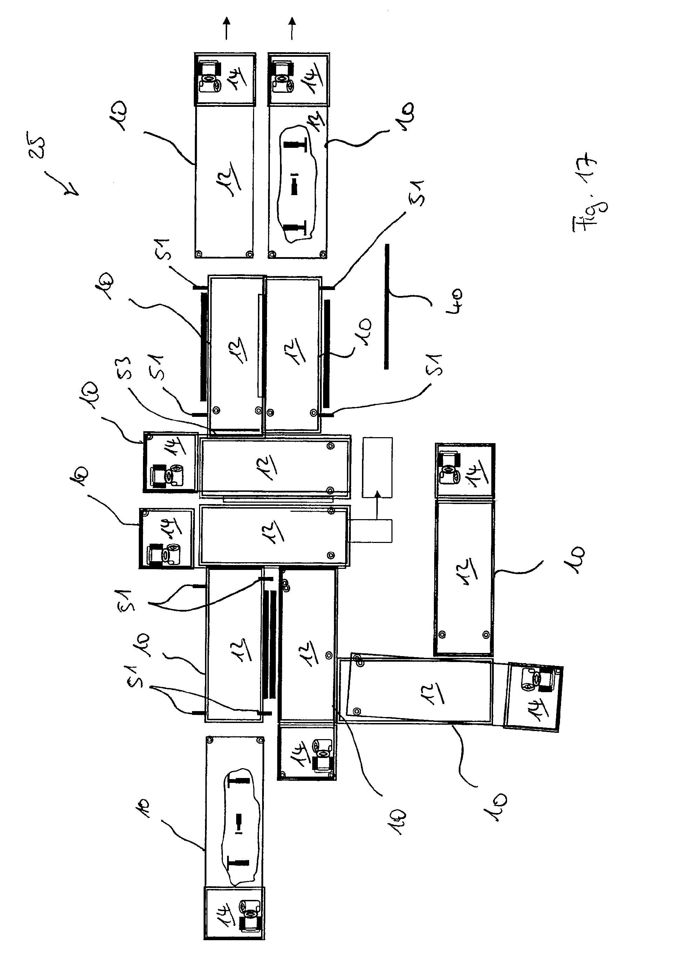

Fig. 17 zeigt beispielhaft eine Funktions-Anordnung 25 aus mehreren der Fahrzeuge 10, die unter verschiedenen Winkeln aneinander gekoppelt sind. Einige der Fahrzeuge 10 sind unter einem Winkel von 90° aneinander gekoppelt sind, während andere Fahrzeuge 10 parallel zueinander ausgerichtet sind, also unter einem Winkel von 180° gekoppelt sind. Selbstverständlich ist auch jeder andere Kopplungswinkel zwischen 5° und 180° gemäß der vorliegenden Erfindung realisierbar. Damit ist es möglich, die Struktur der Funktions-Anordnung 25 beliebig zu gestalten. Vorzugsweise ist an der Funktionseinheit 13 zumindest ein lösbarer Dichtrahmen 53 angeordnet, der als dichtendes Element zum Verbinden zweier Funktionseinheiten 13 ausgebildet und eingerichtet ist. Der Dichtrahmen 53 entspricht im Wesentlichen dem Dichtelement 52, ist jedoch abnehmbar ausgebildet. Vorzugsweise ist der abnehmbare Dichtrahmen 53 am Heck 16 angeordnet.

Ferner weisen die Auflieger 12 bzw. die Funktionseinheiten 13 aller Ausführungen der Erfindung Koppelmittel zum Verbinden der Auflieger 12 bzw. der Funktionseinheiten 13 zu der Funktions-Anordnung 25 auf. Beispielsweise umfassen die Koppelmittel jeweils Aufnahmen für Haltemittel, mit denen die Auflieger 12 miteinander verbindbar sind.

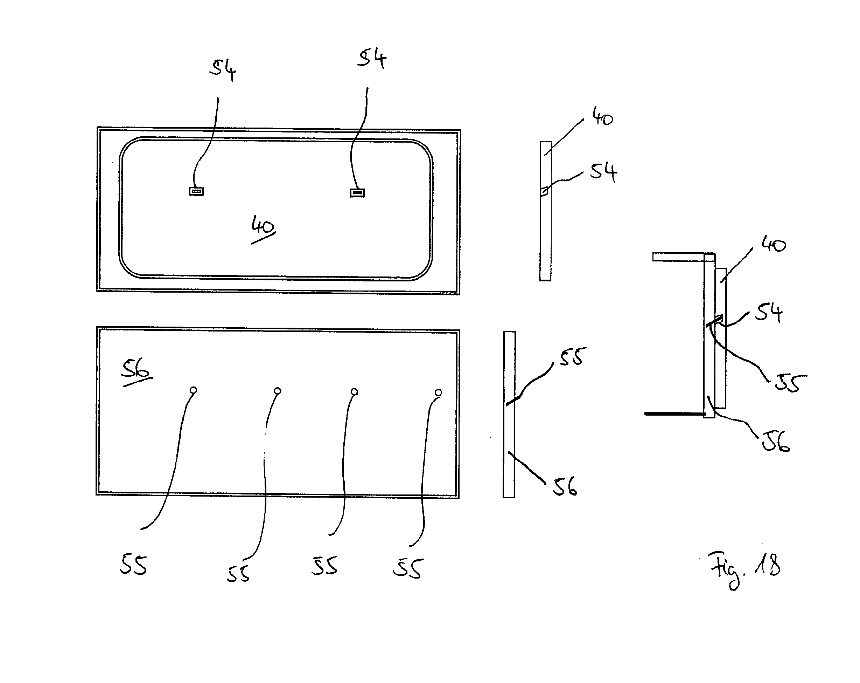

Eine weitere bevorzugte Ausführung der Erfindung zeigt Fig. 18. Die herausnehmbare Seitenwand 40 weist zumindest zwei Aufnahmen 54 für die Aufnahme von mindestens zwei Einhängeelementen 55 auf. Die Aufnahmen 54 sind korrespondierend zu den Einhängeelementen 55 ausgebildet. Die Einhängeelemente 55 sind beispielsweise als Bolzen ausgebildet. Die Einhängeelemente 55 sind an der Außenseite einer der herausnehmbaren Seitenwand 40 gegenüberliegenden Seitenwand 56 angeordnet. Vorzugweise sind die Einhängeelemente 55 sowie die Aufnahmen 54 nach oben geneigt ausgerichtet angeordnet. Mittels der Aufnahmen 54 sowie der Einhängeelemente 55 können die herausnehmbaren Seitenwände 40 vor dem Koppelvorgang zweier Fahrzeuge 10 ohne Hinzunahme weiterer Hilfsmittel, also z.B. ohne einen sonst notwendigen mobilen Kran, aus ihrem Sitz in der Seitenwand des Aufliegers 12 bzw. der Funktionseinheit 13 herausgenommen werden.

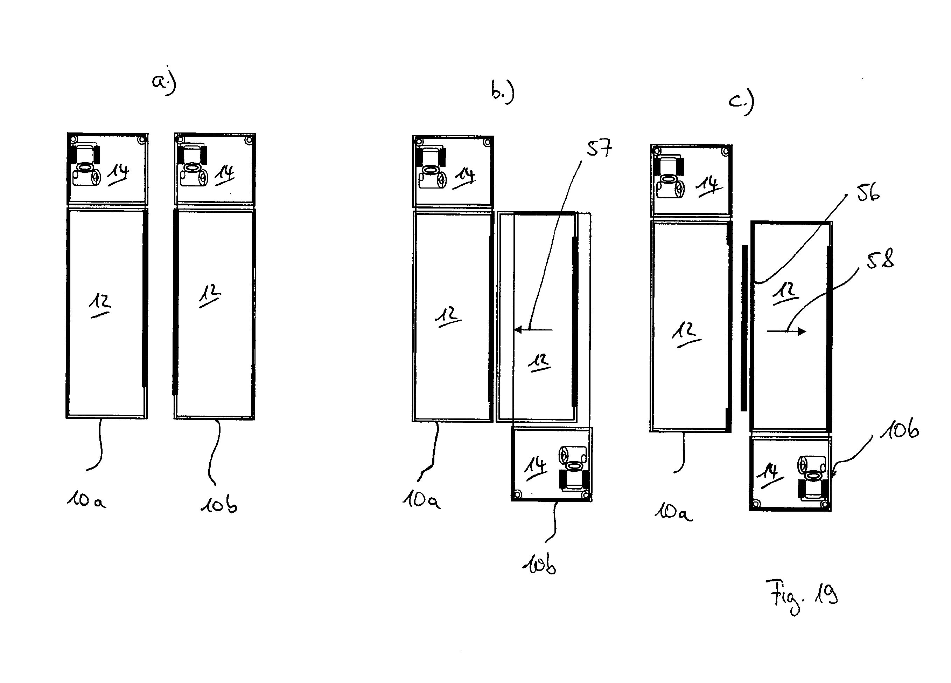

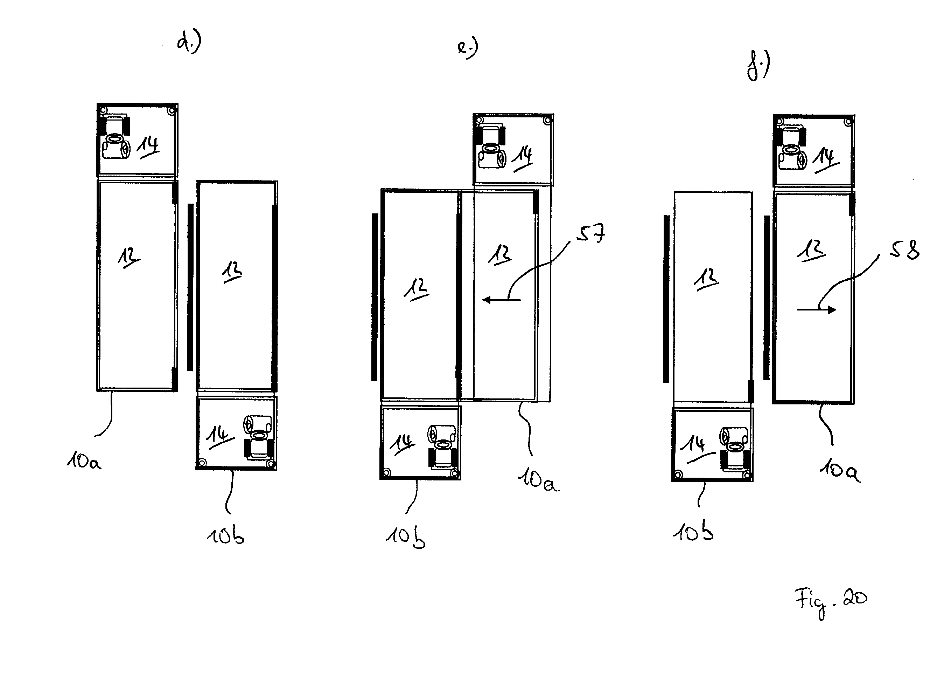

Das erfindungsgemäße Fahrzeug 10 mit der herausnehmbaren Seitenwand 40 wird im Folgenden anhand der Kopplungsvorgangs zweier Fahrzeuge 10a, 10b in den Figuren 19 und 20 näher verdeutlicht. Fig. 19a zeigt die miteinander zu verbindenden Fahrzeuge 10a, 10b in paralleler Ausrichtung. Das Fahrzeug 10b wird zunächst um 180° gewendet und in die Nähe des Fahrzeugs 10a gebracht. Mittels der Verstelleinheit 41 wird der Auflieger 12 des Fahrzeugs 10b in Richtung 57 des Aufliegers 12 des Fahrzeugs 10a bewegt. Die herausnehmbare Seitenwand 40 wird mittels der dabei in die Aufnahmen 54 gleitenden Einhängeelemente 55 aus ihrem Sitz gehoben und ist über die Einhängeelemente 55 bzw. die Aufnahmen 54 an der gegenüberliegenden Seitenwand 56 des Fahrzeugs 10b eingehängt. Anschließend wird der Auflieger 12 des Fahrzeugs 10b mittels der Verstelleinheit 41, wie in Fig. 19c ersichtlich, in Richtung 58 zurück in eine Ausgangsposition gebracht. Figur 20d zeigt die Fahrzeuge 10a, 10b nach dem Herausnehmen der Seitenwand 40 des Fahrzeugs 10a. Wie in der Figur 20e gezeigt, kann das Fahrzeug 10b mit der nun an der gegenüberliegenden Seitenwand 56 eingehängten Seitenwand 40 im Weiteren mit dem Fahrzeug 10a oder einem beliebigen anderen Fahrzeug 10 parallel ausgerichtet werden. Wie der Fig. 20b zu entnehmen ist, wird analog zu dem zuvor beschriebenen Vorgang mittels der Aufnahmen 54 und der Einhängelemente 55 durch Bewegen der Zwischenplatte 43 in Richtung des Pfeils 57 die entsprechende Seitenwand 40 aus ihrem Sitz gehoben. Nach dem Herausheben der Seitenwand 40 des Fahrzeugs 10b wird die Zwischenplatte 43 bzw. der Auflieger 12 des Fahrzeugs 10a durch Bewegen in Richtung des Pfeils 58 wieder in die Ausgangslage zurückbewegt.

Eine vierten Ausführung der Erfindung, die eine vorteilhafte Weiterbildung der zweiten Ausführung darstellt, zeichnet sich durch das Fahrzeug 10 in modularer Bauweise aus, nämlich mit dem Chassis 11 und dem Auflieger 12, wobei der Auflieger 12 als Einheit die Fahrerkabine 14 und die Funktionseinheit 13 umfasst, wobei das Chassis 11 die Chassishubeinrichtung 27 aufweist, die zum vertikalen Ausrichten des Chassis 11 relativ zum Untergrund ausgebildet und eingerichtet ist, und wobei das Fahrzeug 10 zwischen dem Chassis 11 und dem Auflieger 12 eine Linearführungseinrichtung 29 als eine Last aufnehmende Verbindung zwischen dem Auflieger 12 und dem Chassis 11 aufweist, die zum horizontalen Ausrichten des Aufliegers 12 relativ zum Chassis 11 ausgebildet und eingerichtet ist. Die Chassishubeinrichtung 27 und die Linearführungseinrichtung 29 können zusammenfassend als eine Einrichtung dem Fahrzeug zugeordnet sein.

Die Linearführungseinrichtung 29 erlaubt eine horizontale Ausrichtung des Aufliegers 12 relativ zum Chassis 11. Da die Linearführungseinrichtung 29 zwischen dem Chassis 11 und dem Auflieger 12 angeordnet ist, kann der Auflieger 12 horizontal auf dem Chassis 11 bewegt werden. Eine Linearführung der Linearführungseinrichtung 29 kann beispielsweise eine Lineargleitführung, eine Linearwälzführung oder eine Rollenlaufführung sein. Auch kann es sich um eine einachsige oder mehrachsige Linearführung handeln. Da die Linearführungseinrichtung 29 als eine Last aufnehmende Verbindung zwischen dem Auflieger 12 und dem Chassis 11 ausgebildet und eingerichtet ist, können beispielsweise Stützlasten und/oder Querkräfte übertragen werden. Eine Linearführung zeichnet sich in diesem Zusammenhang als besonders vorteilhaft aus, weil eine Linearführung sehr steif ausgestaltet sein kann, so dass hohe Kräfte und/oder Drehmomente übertragbar sind, ohne dass es zu übermäßigen Dehnungen, Biegungen oder Torsionen kommt. Somit ist es auch bei dynamischen Belastungen durch den Auflieger 12 und/oder durch den Funktionsaufbau möglich, eine Kopplung zweier Fahrzeuge 10 zu ermöglichen, und einen durch die sich ändernde Belastung verursachten Versatz 30 zwischen zwei gekoppelten Fahrzeugen möglichst gering zu halten. Mit anderen Worten ist mittels der Linearführungseinrichtung 29 eine steife Verbindung zwischen dem Auflieger 12 und dem Chassis 11 möglich, die auch die Steifigkeit des Fahrzeuges verbessert.

Eine bevorzugte Weiterbildung der ersten Ausbildung der Erfindung zeichnet sich dadurch aus, dass die Linearführungseinrichtung 29 zum horizontalen Ausrichten des Aufliegers 12 relativ zum Chassis 11 eine Linearführungseinrichtung 29 mit mindestens einem entsprechenden Freiheitsgrad und ein entsprechend ausgestaltetes Antriebsmittel umfasst. Der Freiheitsgrad der Linearführung kann beispielsweise parallel zu einer horizontalen Längsachse des Chassis 11 und/oder parallel zu einer horizontalen Querachse des Chassis 11 sein. So ist es möglich, den Auflieger 12 längs und/oder quer auf dem Chassis 11 zu bewegen beziehungsweise horizontal auszurichten. Um die relative horizontale Position des Aufliegers 12 zum Chassis 11 zu verändern, kann das zuvor genannte Antriebsmittel entsprechend ausgebildet und eingerichtet sein. Somit können zwei Fahrzeuge 10 möglichst präzise miteinander gekoppelt werden. Vorausgesetzt, die vertikale Ausrichtung zweier Fahrzeuge 10 ist aufeinander abgestimmt, kann das Andocken erfolgen, indem ausschließlich die Auflieger 12 horizontal ausgerichtet werden. Mit anderen Worten kann die vertikale Ausrichtung unabhängig von der horizontalen Ausrichtung und umgekehrt ausgestaltet sein. Vorteilhafterweise sind die Chassishubeinrichtung 27 und die Linearführungseinrichtung 29 separate und/oder voneinander unabhängige Einrichtungen. Die Chassishubeinrichtung 27 und die Linearführungseinrichtung 29 können beispielsweise mechanisch, hydraulisch, pneumatisch und/oder elektrisch voneinander getrennt und/oder voneinander unabhängig sein. Besonders bevorzugt ist die Chassishubeinrichtung 27 am Unterboden des Chassis 11 angeordnet. Die Linearführungseinrichtung 29 ist hingegen zwischen dem Chassis 11 und dem Auflieger 12 angeordnet. Ferner ist es möglich, dass die Chassishubeinrichtung 27 hydraulisch angetrieben ist, wohingegen die Linearführungseinrichtung 29 beispielsweise elektrisch oder pneumatisch angetrieben ist.

Eine weitere vorteilhafte Weiterbildung der vierten Ausbildung zeichnet sich dadurch aus, dass das Antriebsmittel der Linearführungseinrichtung 29 zumindest im Wesentlichen ausschließlich zur Lastaufnahme entlang des mindestens einen Freiheitsgrades der Linearführung ausgebildet und eingerichtet ist. Da die Linearführung entlang des mindestens einen Freiheitsgrades keine Kräfte überträgt, können diese durch das Antriebsmittel der Linearführungseinrichtung 29 zwischen dem Auflieger 12und dem Chassis 11 übertragen werden. Das Antriebsmittel der Linearführungseinrichtung 29 kann somit zwei Aufgaben übernehmen, nämlich den Antrieb als solches zur horizontalen Ausrichtung des Aufliegers 12 relativ zum Chassis 11 und die lastaufnehmende Verbindung entlang des mindestens einen Freiheitsgrades der Linearführung. Eine besonders vorteilhafte Variante des Antriebsmittels ist in der Weise ausgestaltet, dass es ausschließlich Kräfte entlang des mindestens einen Freiheitsgrades der Linearführung überträgt. Ein solches Antriebsmittel kann beispielsweise ein Hydraulikzylinder sein. Es besteht aber auch die Möglichkeit, dass das Antriebsmittel der Linearführungseinrichtung 29 als eine andere übliche Pneumatik-, Hydraulik- oder Motoreinheit ausgebildet und eingerichtet ist. Eine zweckmäßige Weiterbildung der vierten Ausbildung zeichnet sich dadurch aus, dass das Antriebsmittel der Linearführungseinrichtung 29 eine weitere Hydraulikeinrichtung ist, und in Wirkungsverbund beziehungsweise in Wirkverbindung mit der Linearführung ausschließlich zum horizontalen Ausrichten des Aufliegers gegenüber dem Chassis ausgebildet und eingerichtet ist. Eine alternative Weiterbildung der vierten Ausbildung zeichnet sich dadurch aus, dass die Linearführungseinrichtung 29 derart in das Chassis 11 und/oder in den Auflieger 12 integriert ist und/oder flach ausgestaltet ist, dass das Chassis 11 und der Auflieger 12 zumindest im Wesentlichen abstandsfrei verbunden sind. Je dichter der Auflieger 12 mit dem Chassis 11 verbunden ist, desto geringer sind die Drehmomente, die auf die Verbindung zwischen dem Chassis und dem Auflieger 12 wirken. Vorteilhafterweise sind mit der Linearführung der Linearführungseinrichtung 29 sämtliche Drehmomentarten der Verbindung zwischen Chassis 11 und Auflieger 12 übertragbar. Mit anderen Worten kann die Linearführungseinrichtung 29 in der Weise ausgestaltet sein, dass ein Freiheitsgrad der Linearführung ausschließlich entlang einer Kraftübertragungsrichtung der Verbindung zwischen dem Chassis 11 und dem Auflieger 12 ausgebildet und eingerichtet ist. Somit werden vorzugsweise sämtliche Drehmomente durch die Linearführung der Linearführungseinrichtung 29 übertragen. Durch die vorteilhafte Integration oder flache Ausgestaltung der Linearführung können die auf die Linearführung wirkenden Kräfte vergleichsweise gering gehalten werden, weil der Abstand zwischen dem Chassis 11 und dem Auflieger 12 durch die Linearführung gar nicht oder nur sehr wenig vergrößert wird. Außerdem bietet die Integration der Linearführung oder deren flache Ausgestaltung den Vorteil, dass ein Raum zwischen Chassis und Auflieger möglichst klein gehalten wird, so dass das Fahrzeug zumindest in diesem Bereich einen Schutz gegen das Eindringen beispielsweise von großen Fremdkörpern bietet. Zumindest im Wesentlichen abstandsfrei bedeutet in diesem Zusammenhang, dass die Linearführungseinrichtung 29 den Abstand zwischen dem Chassis 11 und dem Auflieger 12 nicht oder nur unwesentlich in vertikaler Richtung vergrößert. Eine Linearführungseinrichtung 29 ist beispielsweise dann flach ausgestaltet, wenn der Abstand zwischen dem Auflieger 12 und dem Chassis 11 nur wenige Zentimeter beträgt, beispielsweise weniger als 15 cm, vorzugsweise weniger als 10 cm, besonders bevorzugt weniger als 5 cm. Die Linearführung kann mehrere Linearführungselemente aufweisen, wobei das Chassis 11 und der Auflieger 12 jeweils mindestens ein Führungselement aufweisen. So kann beispielsweise das Chassis 11 als Führungselement eine nach innen ragende Schwalbenschwanznut aufweisen, in die ein nach außen ragendes schwalbenschwanzförmig ausgestaltetes Führungselement des Aufliegers 12 eingreift. Zusammen können die Schwalbenschwanznut und das schwalbenschwanzförmig ausgestaltete Führungselement eine Lineargleitführung bilden. Dass die Linearführungseinrichtung 29 in das Chassis 11 und/oder in den Auflieger 12 integriert ist, kann also auch bedeuten, dass ausschließlich die chassisseitigen oder aufliegerseitigen Führungselemente der Linearführungseinrichtung 29 in das Chassis 11 beziehungsweise in den Auflieger 12 integriert sind. Aus dem vorangegangenen Beispiel ist zu entnehmen, dass die Schwalbenschwanznut in den Auflieger 12 integriert ist.

Eine weitere vorteilhafte Weiterbildung der vierten Ausbildung zeichnet sich dadurch aus, dass die Funktionseinheit vollständig lösbar mit der Fahrerkabine 14, der Linearführungseinrichtung 29 und/oder dem Chassis 11 verbunden ist. Das Fahrzeug 10 ist grundsätzlich modular aufgebaut. Die Funktionseinheit 13 kann beispielsweise Teil eines mobilen Lazaretts, einer Kantine, eines Lagers, einer Konferenzraumes oder eines Gefechtstandes sein. Mit anderen Worten ist die Funktionseinheit 13 austauschbar. Dazu kann die Funktionseinheit 13 durch Schnellverbindungsmittel 36 mit der Linearführungseinrichtung 29 verbunden sein. So können beispielsweise klappbare oder einschiebbare Hebel als Linearführungselement des Aufliegers 12 beziehungsweise der Funktionseinheit 13 in nutenförmig ausgestaltete Linearführungselemente des Chassis 11 eingreifen, um eine Linearführung zwischen dem Chassis 11 und dem Auflieger 12 beziehungsweise der Funktionseinheit 13 zu bilden. In einer alternativen Ausgestaltungsvariante ist die Funktionseinheit 13 durch Schnellverbindungsmittel 36 mit der Linearführungseinrichtung 29 verbunden. So kann die Funktionseinheit 13 beispielsweise in ein Schienenelement der Linearführung eingehakt werden. Auch die Fahrerkabine 14 und die Funktionseinheit 13 können durch Schnellverbindungsmittel 36 miteinander verbunden sein. Vorteilhafterweise sind die Fahrerkabine 14 und die Funktionseinheit 13 in der Art miteinander verbunden, dass sie einen gemeinsamen Innenraum aufweisen, der vorzugsweise durch Türen oder ähnliche Mittel trennbar ausgestaltet ist. Durch eine bevorzugte Verbindung zwischen der Funktionseinheit 13 und der Fahrerkabine 14 sowie der jeweiligen Verbindung mit der Linearführungseinrichtung 29 kann der Auflieger 12 als Einheit horizontal ausgerichtet werden. Durch die zuvor genannten Verbindungen kann ein Spiel oder ein Versatz 30 zwischen der Fahrerkabine 14 und der Funktionseinheit 13 verhindert werden.

## Patentansprüche

1. Fahrzeug (10) in modularer Bauweise, nämlich mit einem Chassis (11) und einem vollständig vom Chassis (11) lösbaren Auflieger (12), wobei der Auflieger (12) zumindest eine Funktionseinheit (13) umfasst, und wobei dem Fahrzeug (10) eine Einrichtung zugeordnet ist, die zum Verändern der Position des Aufliegers (12) relativ zu dem Chassis (11) ausgebildet und eingerichtet ist, wobei die Einrichtung eine Verstelleinheit (41) zum horizontalen Verstellen der Lage des Aufliegers (12) zu dem Chassis (11) mit Führungen und Antriebsmitteln (42) umfasst
**dadurch gekennzeichnet, dass**
die Verstelleinheit (41) mindestens zwei Führungen umfasst, die orthogonal zueinander angeordnet sind, wobei jeder Führung mindestens ein Antriebsmittel zugeordnet ist.

2. Fahrzeug nach Anspruch 1, **dadurch gekennzeichnet, dass** die Verstelleinheit (41) eine zwischen dem Chassis (11) und dem Auflieger (12) horizontal bewegbare Zwischenplatte (43) umfasst.

3. Fahrzeug nach Anspruch 2, **dadurch gekennzeichnet, dass** die Verstelleinheit (41) einen ortsfest an dem Chassis (11) angeordneten Rahmen (49) mit zumindest einem Gleitbereich (44) umfasst, auf dem die Zwischenplatte (43) unter Bildung eines Auflagers gleitend gelagert angeordnet ist.

4. Fahrzeug nach einem der Ansprüche 2 bis 3, **dadurch gekennzeichnet, dass** jede Führung ein an der Unterseite (45) der Zwischenplatte (43) angeordnetes Leitelement (46) und ein an dem Antriebsmittel (42) angeordnetes Aufnahmeelement (47) umfasst, wobei das Aufnahmeelement (47) derart korrespondierend zu dem Leitelement (46) ausgebildet und eingerichtet ist, dass das Leitelement (46) form- und/oder kraftschlüssig in das Aufnahmeelement (47) eingreift.

5. Fahrzeug nach einem der Ansprüche 1 bis 4, **dadurch gekennzeichnet, dass** jedes Antriebsmittel (42) eine Hydraulikeinheit ist.

6. Fahrzeug nach einem der Ansprüche vorangehenden Ansprüche, **dadurch gekennzeichnet, dass** das Chassis (11) eine Chassihubeinrichtung (27) aufweist, die zum vertikalen Ausrichten des Chassis (11) relativ zu einem Untergrund ausgebildet und eingerichtet ist.

7. Fahrzeug nach Anspruch 6, **dadurch gekennzeichnet, dass** die Chassishubeinrichtung (27) ein nach unten schwenkbares und arretierbares Hubmittel (28) aufweist.

8. Fahrzeug nach einem der Ansprüche 6 oder 7, **dadurch gekennzeichnet, dass** die Chassishubeinrichtung (27) eine Hydraulikeinrichtung ist und ausschließlich zum vertikalen Ausrichten des Chassis (11) gegenüber dem Untergrund ausgebildet und eingerichtet ist.

9. Fahrzeug nach Anspruch 8, **dadurch gekennzeichnet, dass** die Hydraulikeinrichtung der Chassishubeinrichtung (27) als eine 4-Punkt-Lagerung ausgebildet ist.

10. Fahrzeug nach einem der Ansprüche 8 oder 9, **dadurch gekennzeichnet, dass** die Chassishubeinrichtung (27) an eine Steuerung zum individuellen Steuern und/oder Regeln des Abstands und/oder des Neigungswinkels zwischen dem Chassis (11) und dem Untergrund angeschlossen ist.

11. Fahrzeug nach Anspruch 1, **dadurch gekennzeichnet, dass** die Einrichtung eine separate Hubeinheit (18) umfasst und dem Chassis (11) zugeordnet ist.

12. Fahrzeug nach einem der Ansprüche 1 bis 11, **dadurch gekennzeichnet, dass** dem Auflieger (12) zumindest eine lösbar angeordnete Hubeinrichtung (51) zugeordnet ist, die ausschließlich zum vertikalen Abheben des Aufliegers (12) von der Zwischenplatte (43) und umgekehrt ausgebildet und eingerichtet ist.

13. Fahrzeug nach Anspruch 12, **dadurch gekennzeichnet** das die lösbar angeordnete Hubeinrichtung (51) eine zumindest im Wesentlichen vertikal anordenbare Hydraulikeinrichtung, die mittels eines zumindest im wesentlichen horizontal ausgerichteten Stützelements seitlich mit dem Auflieger (12) verbindbar ist, umfasst.

14. Fahrzeug nach eine der vorgehenden Ansprüche, **dadurch gekennzeichnet, dass** an der Funktionseinheit (13) zumindest ein lösbarer Dichtrahmen (53) angeordnet ist, wobei der Dichtrahmen (53) als dichtendes Element zwischen zwei seitlich benachbarten Funktionseinheiten (13) ausgebildet und eingerichtet ist.

15. Anordnung aus mindestens zwei Fahrzeugen (10) nach einem der vorhergehenden Ansprüche, die jeweils um einen Winkel zwischen 5° und 180° versetzt aneinander gekoppelt sind.

## Claims

1. A vehicle (10) of modular construction, namely with a chassis (11) and a trailer (12) which can be detached completely from the chassis (11), wherein the trailer (12) comprises at least one function unit (13), and wherein a device is associated with the vehicle (10), which device is designed and arranged to change the position of the trailer (12) relative to the chassis (11), wherein the device comprises an adjusting unit (41) for horizontally adjusting the position of the trailer (12) relative to the chassis (11) with guides and driving means (42),
**characterised in that**
the adjusting unit (41) comprises at least two guides which are arranged orthogonally to one another, wherein at least one driving means is associated with each guide.

2. A vehicle according to claim 1, **characterised in that** the adjusting unit (41) comprises an intermediate plate (43) which is horizontally movable between the chassis (11) and the trailer (12).

3. A vehicle according to claim 2, **characterised in that** the adjusting unit (41) comprises a frame (49) arranged in fixed manner on the chassis (11) with at least one sliding region (44) on which the intermediate plate (43) is arranged slidingly mounted, forming a support.

4. A vehicle according to any one of claims 2 to 3, **characterised in that** each guide comprises a guide element (46) arranged on the underside (45) of the intermediate plate (43) and a receiving element (47) arranged on the driving means (42), wherein the receiving element (47) is designed and arranged corresponding to the guide element (46) such that the guide element (46) engages in the receiving element (47) in a positive and/or in a non-positive manner.

5. A vehicle according to any one of claims 1 to 4, **characterised in that** each driving means (42) is a hydraulic unit.

6. A vehicle according to any one of the preceding claims, **characterised in that** the chassis (11) has a chassis lifting device (27) which is designed and arranged for vertical orientation of the chassis (11) relative to a ground surface.

7. A vehicle according to claim 6, **characterised in that** the chassis lifting device (27) has a lifting means (28) which can be pivoted downwards and can be locked.

8. A vehicle according to any one of claims 6 or 7, **characterised in that** the chassis lifting device (27) is a hydraulic device and is designed and arranged exclusively for vertical orientation of the chassis (11) relative to the ground surface.

9. A vehicle according to claim 8, **characterised in that** the hydraulic device of the chassis lifting device (27) is formed as a 4-point bearing.

10. A vehicle according to any one of claims 8 or 9, **characterised in that** the chassis lifting device (27) is connected to a control means for individually controlling and/or regulating the distance and/or the angle of inclination between the chassis (11) and the ground surface.

11. A vehicle according to claim 1, **characterised in that** the device comprises a separate lifting unit (18) and is associated with the chassis (11).

12. A vehicle according to any one of claims 1 to 11, **characterised in that** at least one detachably arranged lifting device (51) is associated with the trailer (12), which device is designed and arranged exclusively for vertically lifting the trailer (12) off from the intermediate plate (43) and vice versa.

13. A vehicle according to claim 12, **characterised in that** the detachably arranged lifting device (51) comprises an at least substantially vertically arrangeable hydraulic device which can be connected laterally to the trailer (12) by means of an at least substantially horizontally oriented supporting element.

14. A vehicle according to any one of the preceding claims, **characterised in that** at least one detachable sealing frame (53) is arranged on the function unit (13), wherein the sealing frame (53) is designed and arranged as a sealing element between two laterally adjacent function units (13).

15. An arrangement consisting of at least two vehicles (10) according to any one of the preceding claims, which are coupled together in each case offset by an angle of between 5° and 180°.

## Revendications

1. Véhicule (10) à structure modulaire, à savoir comprenant un châssis (11) et une semi-remorque (12) pouvant être totalement détachée du châssis (11), la semi-remorque (12) comprenant au moins une unité fonctionnelle (13) et un dispositif conçu et configuré pour modifier la position de la semi-remorque (12) par rapport au châssis (11) est associé au véhicule (10), le dispositif comprenant une unité (41) de réglage servant à régler horizontalement la position de la semi-remorque (12) par rapport au châssis (11) avec des guidages et des moyens (42) d'entraînement
**caractérisé en ce que**
l'unité (41) de réglage comporte au moins deux guidages, perpendiculaires l'un par rapport à l'autre, au moins un moyen d'entraînement étant associé à chaque guidage.

2. Véhicule selon la revendication 1, **caractérisé en ce que** l'unité (41) de réglage comprend une plaque intermédiaire (43) mobile horizontalement entre le châssis (11) et la semi-remorque (12).

3. Véhicule selon la revendication 2, **caractérisé en ce que** l'unité (41) de réglage comprend un cadre (49) fixe, disposé sur le châssis (11) et ayant au moins une surface (44) de glissement, cadre sur lequel la plaque intermédiaire (43) est montée de manière à pouvoir coulisser, formant ainsi un appui.

4. Véhicule selon l'une quelconque des revendications 2 à 3, **caractérisé en ce que** chaque guidage comprend un élément (46) de guidage disposé sur le dessous (45) de la plaque intermédiaire (43), et un élément récepteur (47) disposé sur le moyen (42) d'entraînement, l'élément récepteur (47) étant conçu et configuré de manière correspondante avec l'élément (46) de guidage, de telle sorte que l'élément (46) de guidage entre en prise avec l'élément récepteur (47) par complémentarité de forme et/ou à force.

5. Véhicule selon l'une quelconque des revendications 1 à 4, **caractérisé en ce que** chaque moyen (42) d'entraînement est une unité hydraulique.

6. Véhicule selon l'une quelconque des revendications précédentes, **caractérisé en ce que** le châssis (11) présente un dispositif élévateur (27) de châssis conçu et configuré pour orienter le châssis (11) verticalement par rapport à un sous-sol.

7. Véhicule selon la revendication 6, **caractérisé en ce que** le dispositif élévateur (27) de châssis présente un moyen (28) d'élévation pivotant vers le bas et pouvant être bloqué.

8. Véhicule selon l'une des revendications 6 ou 7, **caractérisé en ce que** le dispositif élévateur (27) de châssis est un dispositif hydraulique et est exclusivement conçu et configuré pour orienter le châssis (11) verticalement par rapport au sous-sol.

9. Véhicule selon la revendication 8, **caractérisé en ce que** le dispositif hydraulique du dispositif élévateur (27) de châssis est conçu comme une assise à quatre points.

10. Véhicule selon l'une des revendications 8 ou 9, **caractérisé en ce que** le dispositif élévateur (27) de châssis est raccordé à une commande servant à commander et/ou réguler individuellement la distance et/ou l'angle d'inclinaison entre le châssis (11) et le sous-sol.

11. Véhicule selon la revendication 1, **caractérisé en ce que** le dispositif comprend une unité élévatrice séparée (18) et qui est associée au châssis (11).

12. Véhicule selon l'une quelconque des revendications 1 à 11, **caractérisé en ce qu'**au moins un dispositif élévateur (51) disposé de manière à pouvoir être détaché est associé à la semi-remorque (12), dispositif conçu et configuré exclusivement pour décrocher verticalement la semi-remorque (12) de la plaque intermédiaire (43) et vice-versa.

13. Véhicule selon la revendication 12, **caractérisé en ce que** le dispositif élévateur (51) disposé de manière à pouvoir être détaché comprend un dispositif hydraulique pouvant être disposé au moins sensiblement verticalement et qui peut être relié latéralement à la semi-remorque (12) au moyen d'un élément de support orienté au moins sensiblement horizontalement.

14. Véhicule selon l'une quelconque des revendications précédentes, **caractérisé en ce qu'**au moins un cadre (53) d'étanchéité pouvant être détaché est disposé sur l'unité fonctionnelle (13), le cadre (53) d'étanchéité étant conçu et configuré comme un élément d'étanchéité entre deux unités fonctionnelles (13) latéralement voisines.

15. Ensemble constitué d'au moins deux véhicules (10) selon l'une quelconque des revendications précédentes, couplés l'un à l'autre respectivement avec un décalage angulaire compris entre 5° et 180°.
